(19) Europäisches Patentamt
European Patent Office
Office européen des brevets

(11) **EP 2 433 772 A1**

(12) **EUROPEAN PATENT APPLICATION**

(43) Date of publication:
28.03.2012 Bulletin 2012/13

(51) Int Cl.:
*B29B 15/12* (2006.01)     *B29B 15/10* (2006.01)
*B29K 101/12* (2006.01)     *B29K 309/08* (2006.01)

(21) Application number: 11194356.9

(22) Date of filing: 16.10.2007

(84) Designated Contracting States:
AT BE BG CH CY CZ DE DK EE ES FI FR GB GR
HU IE IS IT LI LT LU LV MC MT NL PL PT RO SE
SI SK TR

(30) Priority: 20.10.2006 US 85346706 P
09.10.2007 US 869314

(62) Document number(s) of the earlier application(s) in
accordance with Art. 76 EPC:
07854099.4 / 2 083 979

(71) Applicant: **Dow Global Technologies LLC**
**Midland, MI 48674 (US)**

(72) Inventors:
• **Magley, David J**
**Midland, MI Michigan 48642 (US)**
• **Moncla, Brad M**
**Lake Jackson, TX Texas 77566 (US)**

(74) Representative: **Hayes, Adrian Chetwynd et al**
**Boult Wade Tennant**
**Verulam Gardens**
**70 Gray's Inn Road**
**London WC1X 8BT (GB)**

Remarks:
This application was filed on 19-12-2011 as a
divisional application to the application mentioned
under INID code 62.

(54) **Aqueous dispersions disposed on glass-based fibers and glass-containing substrates**

(57) The present invention relates to an article comprising: at least one layer of a compound disposed on at least a portion of a glass-containing substrate, wherein the compound comprises:

(a) a polyolefin having a deformation temperature of less than 110°C; and
(b) a dispersion stabilizing agent; and
wherein the compound imparts a modified property to the substrate; and wherein the substrate is formable.

*FIG. 2*

EP 2 433 772 A1

**Description**

**Background of Invention**

Field of the Invention

The present invention relates generally to aqueous dispersions and dispersion compounds.

Background Art

Long fiber-reinforced thermoplastic resins have been widely used for various industrial product components because they possess excellent mechanical strength, heat resistance, and formability. While it is difficult to produce a long fiber-reinforced thermoplastic resin by kneading cut fibers with a thermoplastic resin in an extruder, it is known that long fiber-reinforced thermoplastic resins can be made from long fiber-reinforced thermoplastic concentrates.

Long fiber-reinforced thermoplastic concentrates are known to be produced by melt pultrusion processes. In melt pultrusion, a fiber strand is pulled through a thermoplastic melt and becomes wetted with the molten matrix polymer or carrier resin. Post forming or stripping means are used to set a consistent fiber content.

However, fiber levels typically do not exceed between 50 to 70 weight percent of the weight of the concentrate. Owing to the high viscosity of thermoplastic melts, incomplete penetration of the fiber with resin may occur during pultrusion. To achieve adequate penetration of the fiber strand by the melt, pultrusion processes generally use very low molecular weight thermoplastics as the carrier resin. However, even low levels of low molecular weight thermoplastic carrier resins present in a long fiber-reinforced thermoplastic concentrate can have deleterious effects on the mechanical strength, heat resistance, and formability of the non-reinforced thermoplastic resin to which the concentrate is added.

In processes described in U.S. Patent Nos. 4,626,306, 4,680,224, 5,725,710, 5,888,580, and 6,045,912, a liquid polymer powder dispersion is used for impregnating the fiber strand. The thermoplastic powder, typically a low molecular weight thermoplastic, is applied to the fiber strand moving in a longitudinal direction through the powder dispersion; the dispersing medium, a solvent (preferably water), is removed from the strand, for example, by heating, after which the thermoplastic is melted, and the composite is consolidated, for example, by rolling.

In these processes, the deposition of constant quantities of powder on the fiber strand moving through the dispersion bath may present problems. The polymer content of the composite depends on the solids content of the dispersion bath. The concentration in the immediate vicinity of the strand fluctuates and does not always correspond precisely to the average concentration of the subsequently supplied dispersion. Numerous remedies have been proposed, such as guides, strand measuring calibration devices, concentration control of the liquid polymer powder dispersion bath, etc., which do not address some of the concerns.

Alternatively, aqueous dispersions of thermoplastic resins have been produced by a process wherein a polymerizable monomer, which is the resin raw material, is polymerized by emulsion polymerization in an aqueous medium in the presence of an emulsifying agent. Advantageously, emulsion polymerizations may produce high molecular weight thermoplastic resins. However, this process is limited by the few number of polymerizable monomers that can be used, therefore, the number of aqueous dispersions of thermoplastic resins that can be produced is limited.

Glass fibers, including continuous fibers, strands and rovings and chopped fibers and strands, have also been used to reinforce various polymeric matrices and have been useful in reinforcing polyolefins. The glass fibers are typically treated during their formation with a chemical treating composition, usually referred to as a sizing composition, to protect the fibers in subsequent processing and to assist the fibers in adhering to a polymeric matrix.

U.S. Patent No. 4,728,573 discloses chemically treated glass fibers prepared by attenuating glass fibers from molten streams of glass issuing forth from the orifices in a bushing or similar device, treating the glass fibers with an aqueous chemical treating composition, gathering the fibers into one or more strands, and collecting the strands as chopped strands or continuous strands in a multilayered package. The aqueous chemical treating composition includes one or more amine organo coupling agents, an aqueous emulsion or dispersion of a carboxylic-modified polyolefin resin that has been neutralized or nearly neutralized with an organic or inorganic base, an aqueous-soluble, dispersible or emulsifiable film-forming polymer, and a binder stabilizer.

WO2004099529 discloses a drywall tape including a web of glass fibers and a coating disposed over a portion of the glass fibers. The coating comprises a resinous binder that is at least partially soluble or dispersible in a joint compound. The coating is further capable of forming an adhesive bond with the joint compound when set.

U.S. Patent No. 6,818,698 (WO2004031246) discloses the application of high molecular weight functionalized polyolefin emulsions onto glass fibers, either during the glass fiber manufacturing process or at a later stage, to obtain reinforced polypropylene composites with a high mechanical performance.

The polyolefin dispersions used in the patents and publications noted above each contain functionalized polyolefins, such as maleic anhydride grafted polypropylene. Other publications that disclose coating glass fibers or glass-fiber reinforced articles include U.S. Patent Nos. 5,437,928,5,891,284, and 5,972,166.

It is desired to improve these and other fiber-based reinforcement structures. Improvements needed may include adhesion between the fiber-based reinforcement and additional components of a structure. In addition, enhancements to the ability to form articles using the reinforced structure may be desirable.

## Summary of Invention

In one aspect, embodiments disclosed herein relate to a method of forming an article, the method may include applying a compound to a glass-containing substrate, the compound may include an aqueous dispersion that may include: (a) a thermoplastic resin; (b) a dispersion stabilizing agent; and (c) water; and removing at least a portion of the water

In other aspects, embodiments disclosed herein relate to an article including: a compound in contact with a portion of a glass-containing substrate, wherein the compound at the time of contacting may include an aqueous dispersion that may include (a) a polyolefin having a deformation temperature of less than 110°C, (b) a dispersion stabilizing agent, and (c) water, wherein the compound imparts a modified property to the substrate, and wherein the substrate is formable.

In other aspects, embodiments disclosed herein relate to an article formed from a compound in contact with a portion of a glass-containing substrate, wherein the compound at the time of contacting may include an aqueous dispersion that may include: (a) a thermoplastic resin; (b) a dispersion stabilizing agent; and (c) water wherein the article is at least 92 percent by weight glass based on a total weight of the glass-containing substrate, the thermoplastic resin, and the dispersion stabilizing agent.

In other aspects, embodiments disclosed herein relate to a coated fiber that may include: a compound in contact with a portion of a glass-based fiber, wherein the compound at the time of contacting may include an aqueous dispersion formed from: (a) a thermoplastic resin; (b) a dispersion stabilizing agent; and (c) water, wherein the fiber has a diameter between 5 and 35 microns; and wherein a thickness of a coating layer of the compound on the glass-based fiber ranges from about 0.1 to 10 microns.

In other aspects, embodiments disclosed herein relate to a method of coating a fiber including: applying a compound to a glass-based fiber, the compound may include: an aqueous dispersion including: (a) a thermoplastic resin; (b) a dispersion stabilizing agent; and (c) water; removing at least a portion of the water.

In other aspects, embodiments disclosed herein relate to an article having: at least one layer of a compound disposed on at least a portion of a glass-containing substrate, wherein the compound may include: (a) a polyolefin having a deformation temperature of less than 110°C; and (b) a dispersion stabilizing agent; wherein the compound imparts a modified property to the substrate; and wherein the substrate is formable.

Other aspects and advantages of the invention will be apparent from the following description and the appended claims.

## Brief Description of Drawings

Figure 1 shows an extruder that may be used to form dispersions in accordance with embodiments disclosed herein.

Figure 2 is a block flow diagram showing an apparatus suitable for practicing the process of the present invention.

Figure 3 is a block flow diagram showing an alternative apparatus suitable for practicing the process of the present invention.

## Detailed Description

Embodiments relate to articles manufactured by coating or impregnating a structure with a compound. In some embodiments, the compound, when applied, may include a dispersion that includes a base polymer and a stabilizing agent. In certain embodiments, the structure may be a glass-based fiber. In other embodiments, the structure may be a glass-containing substrate.

Other embodiments relate to fiber-reinforced articles manufactured using an aqueous dispersion of polyolefins. For example, aqueous dispersion of polyolefins may be used to coat fiber-based structures (including fiber rovings, mats and fabrics). In certain embodiments, the polyolefin dispersions may contain at least one polyolefin phase that has no functionality, thereby producing a coating/binder having an unfunctionalized polyolefin phase. Inclusion of this unfunctionalized polyolefin in a coating/binder may result in improved properties, such as improved binding and compatibility with other components in a structure.

As used herein, the term "glass-based fiber" refers to glass fibers and natural or synthetic fibers that contain at least 50% glass.

As used herein, the term "glass-containing substrate" refers to at least a two-dimensional structure containing glass that is not a mono-filament or a bundle of mono-filaments. Accordingly, the glass-containing substrate has both a length and a width, and in preferred embodiments is formable.

As used herein, the term "formable" refers to the ability to further process a substrate into a new shape under application of heat and/or pressure.

**Aqueous Dispersion**

More generally, embodiments disclosed herein relate to aqueous dispersions and compounds made from aqueous dispersions that are useful for imparting a modified property to a substrate, such as a glass-based fiber or a glass-containing substrate. In certain embodiments, the dispersions may be contacted with the substrate in the form of a froth or a foam. Dispersions used in embodiments disclosed herein include water, (A) at least one thermoplastic resin, and (B) a dispersion stabilizing agent. These are discussed in more detail below.

**Thermoplastic resin**

The thermoplastic resin (A) included in embodiments of the aqueous dispersion of the present disclosure is a resin that is not readily dispersible in water by itself. The term "resin," as used herein, should be construed to include synthetic polymers or chemically modified natural resins.

Resins used in embodiments disclosed herein may include elastomers and blends of olefin polymers. In some embodiments, the thermoplastic resin is a semicrystalline resin. The term "semi-crystalline" is intended to identify those resins that possess at least one endotherm when subjected to standard differential scanning calorimetry (DSC) evaluation. Some semi-crystalline polymers exhibit a DSC endotherm that exhibits a relatively gentle slope as the scanning temperature is increased past the final endotherm maximum. This reflects a polymer of broad melting range rather than a polymer having what is generally considered to be a sharp melting point. Some polymers useful in the dispersions have a single melting point while other polymers have more than one melting point.

In some polymers one or more of the melting points may be sharp such that all or a portion of the polymer melts over a fairly narrow temperature range, such as a few degrees centigrade. In other embodiments, the polymer may exhibit broad melting characteristics over a range of about 20°C. In yet other embodiments, the polymer may exhibit broad melting characteristics over a range of greater than 50°C.

The thermoplastic resin may be a non-functionalized resin in some embodiments. In other embodiments, the thermoplastic resin may be a non-polar resin.

Examples of the thermoplastic resin (A) which may be used in embodiments disclosed herein include homopolymers and copolymers (including elastomers) of an alpha-olefin such as ethylene, propylene, 1-butene, 3-methyl-1-butene, 4-methyl-1-pentene, 3-methyl-1- pentene, 1-heptene, 1-hexene, 1-octene, 1-decene, and 1-dodecene, as typically represented by polyethylene, polypropylene, poly-1-butene, poly-3-methyl-1-butene, poly-3-methyl-1-pentene, poly-4-methyl-1-pentene, ethylene-propylene copolymer, ethylene-1-butene copolymer, and propylene- 1-butene copolymer; copolymers (including elastomers) of an alpha-olefin with a conjugated or non-conjugated diene, as typically represented by ethylene-butadiene copolymer and ethylene-ethylidene norbornene copolymer; and polyolefins (including elastomers) such as copolymers of two or more alpha-olefins with a conjugated or non-conjugated diene, as typically represented by ethylene-propylene-butadiene copolymer, ethylene-propylene- dicyclopentadiene copolymer, ethylene-propylene-1,5-hexadiene copolymer, and ethylene-propylene-ethylidene norbornene copolymer; ethylene-vinyl compound copolymers such as ethylene-vinyl acetate copolymer, ethylene-vinyl alcohol copolymer, ethylene-vinyl chloride copolymer, ethylene acrylic acid or ethylene-(meth)acrylic acid copolymers, and ethylene-(meth)acrylate copolymer; styrenic copolymers (including elastomers) such as polystyrene, ABS, acrylonitrile-styrene copolymer, $\alpha$-methylstyrene-styrene copolymer, styrene vinyl alcohol, styrene acrylates such as styrene methylacrylate, styrene butyl acrylate, styrene butyl methacrylate, and styrene butadienes and crosslinked styrene polymers; and styrene block copolymers (including elastomers) such as styrene-butadiene copolymer and hydrate thereof, and styrene-isoprene-styrene triblock copolymer; polyvinyl compounds such as polyvinyl chloride, polyvinylidene chloride, vinyl chloride- vinylidene chloride copolymer, polymethyl acrylate, and polymethyl methacrylate; polyamides such as nylon 6, nylon 6,6, and nylon 12; thermoplastic polyesters such as polyethylene terephthalate and polybutylene terephthalate; polycarbonate, polyphenylene oxide, and the like; and glassy hydrocarbon-based resins, including poly-dicyclopentadiene polymers and related polymers (copolymers, terpolymers); saturated mono-olefins such as vinyl acetate, vinyl propionate and vinyl butyrate and the like; vinyl esters such as esters of monocarboxylic acids, including methyl acrylate, ethyl acrylate, n-butylacrylate, isobutyl acrylate, dodecyl acrylate, n-octyl acrylate, phenyl acrylate, methyl methacrylate, ethyl methacrylate, and butyl methacrylate and the like; acrylonitrile, methacrylonitrile, acrylamide, mixtures thereof; resins produced by ring opening metathesis and cross metathesis polymerization and the like. These resins may be used either alone or in combinations of two or more. Examples of specific thermoplastic resins include styrene butadiene copolymers with a styrene content of from about 70 to about 95 weight percent.

As one suitable type of resin, the esterification products of a di-or polycarboxylic acid and a diol comprising a diphenol may be used. These resins are illustrated in U.S. Pat. No. 3,590,000, which is incorporated herein by reference. Other specific example of resins include styrene/methacrylate copolymers, and styrene/butadiene copolymers; suspension polymerized styrene butadienes; polyester resins obtained from the reaction of bisphenol A and propylene oxide followed by the reaction of the resulting product with fumaric acid; and branched polyester resins resulting from the reaction of dimethylterphthalate, 1,3-butanediol, 1,2-propanediol, and pentaerythritol, styrene acrylates, and mixtures thereof.

Further, specific embodiments employ ethylene-based polymers, propylene-based polymers, propylene-ethylene copolymers, and styrenic copolymers as one component of a composition. Other embodiments use polyester resins, including those containing aliphatic diols such as UNOXOL 3,4 diol available from The Dow Chemical Company (Midland, MI).

In selected embodiments, one component is formed from ethylene-alpha olefin copolymers or propylene-alpha olefin copolymers. In particular, in select embodiments, the thermoplastic resin comprises one or more non-polar polyolefins.

In specific embodiments, polyolefins such as polypropylene, polyethylene, copolymers thereof, and blends thereof, as well as ethylene-propylene-diene terpolymers, may be used. In some embodiments, preferred olefinic polymers include homogeneous polymers, as described in U.S. Pat. No. 3,645,992 issued to Elston; high density polyethylene (HDPE), as described in U.S. Pat. No. 4,076,698 issued to Anderson; heterogeneously branched linear low density polyethylene (LLDPE); heterogeneously branched ultra low linear density polyethylene (ULDPE); homogeneously branched, linear ethylene/alpha-olefin copolymers; homogeneously branched, substantially linear ethylene/alpha-olefin polymers, which can be prepared, for example, by processes disclosed in U.S. Pat. Nos. 5,272,236 and 5,278,272, the disclosures of which are incorporated herein by reference; and high pressure, free radical polymerized ethylene polymers and copolymers such as low density polyethylene (LDPE) or ethylene vinyl acetate polymers (EVA).

Polymer compositions, and blends thereof, described in U.S. Pat. Nos. 6,566,446, 6,538,070, 6,448,341, 6,316,549, 6,111,023, 5,869,575, 5,844,045, or 5,677,383, each of which is incorporated herein by reference in its entirety, may also be suitable in some embodiments. In some embodiments, the blends may include two different Ziegler-Natta polymers. In other embodiments, the blends may include blends of a Ziegler-Natta and a metallocene polymer. In still other embodiments, the polymer used herein may be a blend of two different metallocene polymers. In other embodiments, single site catalyst polymers may be used.

In some embodiments, the polymer is a propylene-based copolymer or interpolymer. In some particular embodiments, the propylene-based copolymer or interpolymer is characterized as having substantially isotactic propylene sequences. The term "substantially isotactic propylene sequences" and similar terms mean that the sequences have an isotactic triad (mm) measured by $^{13}$C NMR of greater than about 0.85 in one embodiment; greater than about 0.90 in another embodiment; greater than about 0.92 in another embodiment; and greater than about 0.93 in yet another embodiment. Isotactic triads are well-known in the art and are described in, for example, U.S. Pat. No. 5,504,172 and WO 00/01745, which refer to the isotactic sequence in terms of a triad unit in the copolymer molecular chain determined by $^{13}$C NMR spectra.

One embodiment of the propylene-based polymer is a propylene-ethylene copolymer or interpolymer, where ethylene may be present in an amount from about 5% to about 25% by weight. In some embodiment, the propylene-rich alpha-olefin interpolymer is characterized as having an isotactic triad (mm) measured by $^{13}$C NMR of greater than about 0.85. Some such propylene-rich alpha-olefin interpolymers may have from 5 to 25% by weight of ethylene-derived units and 95 to 75% by weight of propylene-derived units. Additionally, some propylene-rich alpha-olefin interpolymers have (a) a melting point of less than 90°C; (b) a relationship of elasticity to 500% tensile modulus such that the elasticity is less than or equal to 0.935M+12, where elasticity is in percent and M is the 500% tensile modulus in MPa; and (c) a relationship of flexural modulus to 500% tensile modulus such that flexural modulus is less than or equal to $4.2e^{0.27M}+50$, where flexural modulus is in MPa and M is the 500% tensile modulus in MPa. In some embodiments, the propylene rich alpha-olefin interpolymer comprises 6 to 20% by weight of ethylene-derived units and 94 to 80% by weight of propylene-derived units. In other embodiments, polymers may comprise 8 to 20% by weight of ethylene-derived units and 92 to 80% by weight of propylene-derived units. In still other embodiments, polymers may comprise 10 to 20% by weight of ethylene-derived units and 90 to 80% by weight of propylene-derived units.

In other particular embodiments, the base polymer may be ethylene vinyl acetate (EVA) based polymers. In other embodiments, the base polymer may be ethylene-methyl acrylate (EMA) based polymers. In other particular embodiments, the ethylene-alpha olefin copolymer may be ethylene-butene, ethylene-hexene, or ethylene-octene copolymers or interpolymers. In other particular embodiments, the propylene-alpha olefin copolymer may be a propylene-ethylene or a propylene-ethylene-butene copolymer or interpolymer.

In one particular embodiment, the thermoplastic resin may comprise an alpha-olefin interpolymer of ethylene with a comonomer comprising an alkene, such as 1-octene. The ethylene and octene copolymer may be present alone or in combination with another thermoplastic resin, such as ethylene-acrylic acid copolymer. When present together, the weight ratio between the ethylene and octene copolymer and the ethylene-acrylic acid copolymer may range from about 1:10 to about 10:1, such as from about 3:2 to about 2:3. The polymeric resin, such as the ethylene-octene copolymer, may have a crystallinity of less than about 50%, such as less than about 25%. In some embodiments, the crystallinity of the polymer may range from 5 to 35 percent. In other embodiments, the crystallinity may range from 7 to 20 percent.

Embodiments disclosed herein may also include a polymeric component that may include at least one multi-block olefin interpolymer. Suitable multi-block olefin interpolymers may include those described in U.S. Provisional Patent Application No. 60/818,911, for example. The term "multi-block copolymer" or refers to a polymer comprising two or more chemically distinct regions or segments (referred to as "bocks") preferably joined in a linear manner, that is, a polymer comprising chemically differentiated units which are joined end-to-end with respect to polymerized ethylenic functionality, rather than in pendent or grafted fashion. In certain embodiments, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property.

The multi-block copolymers are characterized by unique distributions of polydispersity index (PDI or $M_w/M_n$), block length distribution, and/or block number distribution due to the unique process making of the copolymers. More specifically, when produced in a continuous process, embodiments of the polymers may possess a PDI ranging from about 1.7 to about 8; from about 1.7 to about 3.5 in other embodiments; from about 1.7 to about 2.5 in other embodiments; and from about 1.8 to about 2.5 or from about 1.8 to about 2.1 in yet other embodiments. When produced in a batch or semi-batch process, embodiments of the polymers may possess a PDI ranging from about 1.0 to about 2.9; from about 1.3 to about 2.5 in other embodiments; from about 1.4 to about 2.0 in other embodiments; and from about 1.4 to about 1.8 in yet other embodiments.

One example of the multi-block olefin interpolymer is an ethylene/$\alpha$-olefin block interpolymer. Another example of the multi-block olefin interpolymer is a propylene/$\alpha$-olefin interpolymer. The following description focuses on the interpolymer as having ethylene as the majority monomer, but applies in a similar fashion to propylene-based multi-block interpolymers with regard to general polymer characteristics.

The ethylene/$\alpha$-olefin multi-block copolymers may comprise ethylene and one or more co-polymerizable $\alpha$-olefin comonomers in polymerized form, characterized by multiple (i.e., two or more) blocks or segments of two or more polymerized monomer units differing in chemical or physical properties (block interpolymer). In some embodiments, the copolymer is a multi-block interpolymer. In some embodiments, the multi-block interpolymer may be represented by the following formula:

$$(AB)_n$$

where n is at least 1, and in various embodiments n is an integer greater than 1, such as 2, 3, 4, 5, 10, 15, 20, 30, 40, 50, 60, 70, 80, 90, 100, or higher; "A" represents a hard block or segment; and "B" represents a soft block or segment. Preferably, A's and B's are linked in a linear fashion, not in a branched or a star fashion. "Hard" segments refer to blocks of polymerized units in which ethylene is present in an amount greater than 95 weight percent in some embodiments, and in other embodiments greater than 98 weight percent. In other words, the comonomer content in the hard segments is less than 5 weight percent in some embodiments, and in other embodiments, less than 2 weight percent of the total weight of the hard segments. In some embodiments, the hard segments comprise all or substantially all ethylene. "Soft" segments, on the other hand, refer to blocks of polymerized units in which the comonomer content is greater than 5 weight percent of the total weight of the soft segments in some embodiments, greater than 8 weight percent, greater than 10 weight percent, or greater than 15 weight percent in various other embodiments. In some embodiments, the comonomer content in the soft segments may be greater than 20 weight percent, greater than 25 weight percent, greater than 30 weight percent, greater than 35 weight percent, greater than 40 weight percent, greater than 45 weight percent, greater than 50 weight percent, or greater than 60 weight percent in various other embodiments.

In some embodiments, A blocks and B blocks are randomly distributed along the polymer chain. In other words, the block copolymers do not have a structure like:

AAA—AA-BBB—BB

In other embodiments, the block copolymers do not have a third block. In still other embodiments, neither block A nor block B comprises two or more segments (or sub-blocks), such as a tip segment.

The multi-block interpolymers may be characterized by an average block index, ABI, ranging from greater than zero to about 1.0 and a molecular weight distribution, $M_w/M_n$, greater than about 1.3. The average block index, ABI, is the weight average of the block index ("BI") for each of the polymer fractions obtained in preparative TREF from 20°C and 110°C, with an increment of 5°C:

$$ABI = \sum (w_i BI_i)$$

where $BI_i$ is the block index for the $i^{th}$ fraction of the multi-block interpolymer obtained in preparative TREF, and $w_i$ is the weight percentage of the $i^{th}$ fraction.

Similarly, the square root of the second moment about the mean, hereinafter referred to as the second moment weight average block index, may be defined as follows:

$$2^{nd} \text{ moment weight average BI} = \sqrt{\frac{\sum (w_i (BI_i - ABI)^2)}{\frac{(N-1)\sum w_i}{N}}}$$

For each polymer fraction, BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}}$$

where $T_X$ is the analytical temperature rising elution fractionation (ATREF) elution temperature for the $i^{th}$ fraction (preferably expressed in Kelvin), $P_X$ is the ethylene mole fraction for the $i^{th}$ fraction, which may be measured by NMR or IR as described below. $P_{AB}$ is the ethylene mole fraction of the whole ethylene/$\alpha$-olefin interpolymer (before fractionation), which also may be measured by NMR or IR. $T_A$ and $P_A$ are the ATREF elution temperature and the ethylene mole fraction for pure "hard segments" (which refer to the crystalline segments of the interpolymer). As an approximation or for polymers where the "hard segment" composition is unknown, the $T_A$ and $P_A$ values are set to those for high density polyethylene homopolymer.

$T_{AB}$ is the ATREF elution temperature for a random copolymer of the same composition (having an ethylene mole fraction of $P_{AB}$) and molecular weight as the multi-block interpolymer. $T_{AB}$ may be calculated from the mole fraction of ethylene (measured by NMR) using the following equation:

$$Ln\, P_{AB} = \alpha/T_{AB} + \beta$$

where a and $\beta$ are two constants which may be determined by a calibration using a number of well characterized preparative TREF fractions of a broad composition random copolymer and/or well characterized random ethylene copolymers with narrow composition. It should be noted that $\alpha$ and $\beta$ may vary from instrument to instrument. Moreover, one would need to create an appropriate calibration curve with the polymer composition of interest, using appropriate molecular weight ranges and comonomer type for the preparative TREF fractions and/or random copolymers used to create the calibration. There is a slight molecular weight effect. If the calibration curve is obtained from similar molecular weight ranges, such effect would be essentially negligible. In some embodiments, random ethylene copolymers and/or preparative TREF fractions of random copolymers satisfy the following relationship:

$$Ln\, P = -237.83/T_{ATREF} + 0.639$$

The above calibration equation relates the mole fraction of ethylene, P, to the analytical TREF elution temperature, $T_{ATREF}$, for narrow composition random copolymers and/or preparative TREF fractions of broad composition random copolymers. $T_{XO}$ is the ATREF temperature for a random copolymer of the same composition and having an ethylene mole fraction of $P_X$. $T_{XO}$ may be calculated from $LnP_X = \alpha/T_{XO} + \beta$. Conversely, Pxo is the ethylene mole fraction for a random copolymer of the same composition and having an ATREF temperature of $T_X$, which may be calculated from Ln Pxo $= \alpha/T_X + \beta$.

Once the block index (BI) for each preparative TREF fraction is obtained, the weight average block index, ABI, for the whole polymer may be calculated. In some embodiments, ABI is greater than zero but less than about 0.4 or from about 0.1 to about 0.3. In other embodiments, ABI is greater than about 0.4 and up to about 1.0. In yet other embodiments, ABI should be in the range of from about 0.4 to about 0.7, from about 0.5 to about 0.7, or from about 0.6 to about 0.9. In some embodiments, ABI is in the range of from about 0.3 to about 0.9, from about 0.3 to about 0.8, or from about 0.3 to about 0.7, from about 0.3 to about 0.6, from about 0.3 to about 0.5, or from about 0.3 to about 0.4. In other embodiments, ABI is in the range of from about 0.4 to about 1.0, from about 0.5 to about 1.0, or from about 0.6 to about 1.0, from about 0.7 to about 1.0, from about 0.8 to about 1.0, or from about 0.9 to about 1.0.

Another characteristic of the multi-block interpolymer is that the interpolymer may comprise at least one polymer fraction which may be obtained by preparative TREF, wherein the fraction has a block index greater than about 0.1 and up to about 1.0 and the polymer having a molecular weight distribution, $M_w/M_n$, greater than about 1.3. In some embodiments, the polymer fraction has a block index greater than about 0.6 and up to about 1.0, greater than about 0.7 and up to about 1.0, greater than about 0.8 and up to about 1.0, or greater than about 0.9 and up to about 1.0. In other embodiments, the polymer fraction has a block index greater than about 0.1 and up to about 1.0, greater than about 0.2 and up to about 1.0, greater than about 0.3 and up to about 1.0, greater than about 0.4 and up to about 1.0, or greater than about 0.4 and up to about 1.0. In still other embodiments, the polymer fraction has a block index greater than about 0.1 and up to about 0.5, greater than about 0.2 and up to about 0.5, greater than about 0.3 and up to about 0.5, or greater than about 0.4 and up to about 0.5. In yet other embodiments, the polymer fraction has a block index greater than about 0.2 and up to about 0.9, greater than about 0.3 and up to about 0.8, greater than about 0.4 and up to about 0.7, or greater than about 0.5 and up to about 0.6.

Ethylene α-olefin multi-block interpolymers used in embodiments disclosed herein may be interpolymers of ethylene with at least one $C_3$-$C_{20}$ α-olefin. The interpolymers may further comprise $C_4$-$C_{18}$ diolefin and/or alkenylbenzene. Suitable unsaturated comonomers useful for polymerizing with ethylene include, for example, ethylenically unsaturated monomers, conjugated or non-conjugated dienes, polyenes, alkenylbenzenes, etc. Examples of such comonomers include $C_3$-$C_{20}$ α-olefins such as propylene, isobutylene, 1-butene, 1-hexene, 1-pentene, 4-methyl-1-pentene, 1-heptene, 1-octene, 1-nonene, 1-decene, and the like. In certain embodiments, the α-olefins may be 1-Butene or 1-octene. Other suitable monomers include styrene, halo-or alkyl-substituted styrenes, vinylbonzocyclobutane, 1,4-hexadiene, 1,7-octadiene, and naphthenics (such as cyclopentene, cyclohexene, and cyclooctene, for example).

The multi-block interpolymers disclosed herein may be differentiated from conventional, random copolymers, physical blends of polymers, and block copolymers prepared via sequential monomer addition, fluxional catalysts, and anionic or cationic living polymerization techniques. In particular, compared to a random copolymer of the same monomers and monomer content at equivalent crystallinity or modulus, the interpolymers have better (higher) heat resistance as measured by melting point, higher TMA penetration temperature, higher high-temperature tensile strength, and/or higher high-temperature torsion storage modulus as determined by dynamic mechanical analysis. Properties of infill may benefit from the use of embodiments of the multi-block interpolymers, as compared to a random copolymer containing the same monomers and monomer content, the multi-block interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

Other olefin interpolymers include polymers comprising monovinylidene aromatic monomers including styrene, o-methyl styrene, p-methyl styrene, t-butylstyrene, and the like. In particular, interpolymers comprising ethylene and styrene may be used. In other embodiments, copolymers comprising ethylene, styrene and a $C_3$-$C_{20}$ α-olefin, optionally comprising a $C_4$-$C_{20}$ diene, may be used.

Suitable non-conjugated diene monomers may include straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbomene (VNB), 5-methylene-2-norbornene (MNB), and dicyclopentadiene (DCPD).

One class of desirable polymers that may be used in accordance with embodiments disclosed herein includes elastomeric interpolymers of ethylene, a $C_3$-$C_{20}$ α-olefin, especially propylene, and optionally one or more diene monomers. Preferred α-olefins for use in this embodiment are designated by the formula $CH_2=CHR^*$, where $R^*$ is a linear or branched alkyl group of from 1 to 12 carbon atoms. Examples of suitable α-olefins include, but are not limited to, propylene, isobutylene, 1-butene, 1-pentene, 1-hexene, 4-methyl-1-pentene, and 1-octene. A particularly preferred α-olefin is propylene. The propylene-based polymers are generally referred to in the art as EP or EPDM polymers. Suitable dienes for use in preparing such polymers, especially multi-block EPDM type polymers include conjugated or non-conjugated, straight or branched chain-, cyclic- or polycyclicdienes comprising from 4 to 20 carbons. Preferred dienes include 1,4-pentadiene, 1,4-hexadiene, 5-ethylidene-2-norbornene, dicyclopentadiene, cyclohexadiene, and 5-butylidene-2-norbornene. A particularly preferred diene is 5-ethylidene-2-norbornene.

In select embodiments, the thermoplastic resin is formed from ethylene-alpha olefin copolymers or propylene-alpha olefin copolymers. In particular, in select embodiments, the thermoplastic resin includes one or more non-polar polyolefins.

The olefin polymers, copolymers, interpolymers, and multi-block interpolymers may be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an olefin polymer, or it may be copolymerized with ethylene and an optional additional comonomer to form an interpolymer of ethylene, the functional comonomer and optionally other comonomer(s). Means for grafting functional groups onto polyethylene are described for example in U.S. Patents Nos. 4,762,890, 4,927,888, and 4,950,541, the disclosures of which are incorporated herein by reference in their entirety. One particularly useful functional group is maleic anhydride.

The amount of the functional group present in the functional polymer may vary. The functional group may be present in an amount of at least about 0.25 weight percent in some embodiments; at least about 5 weight percent in other embodiments; and at least about 7 weight percent in yet other embodiments. The functional group may be present in an amount less than about 40 weight percent in some embodiments; less than about 30 weight percent in other embodiments; and less than about 25 weight percent in yet other embodiments.

In certain embodiments, the thermoplastic resin may be an ethylene-octene copolymer or interpolymer having a density between 0.857 and 0.911 g/cc and melt index (190°C with 2.16 kg weight) from 0.1 to 100 g/10 min. In other embodiments, the ethylene-octene copolymers may have a density between 0.857 and 0.902 g/cc and melt index (190°C with 2.16 kg weight) from 0.8 to 35 g/10 min.

In certain embodiments, the thermoplastic resin may be a propylene-ethylene copolymer or interpolymer having an ethylene content between 5 and 20% by weight and a melt flow rate (230°C with 2.16 kg weight) from 0.5 to 300 g/10 min. In other embodiments, the propylene-ethylene copolymer or interpolymer may have an ethylene content between 5 and 12% by weight and a melt flow rate (230°C with 2,16 kg weight) from 1 to 100 g/10 min.

In certain other embodiments, the thermoplastic resin may be a low density polyethylene having a density between 0.911 and 0.925 g/cc and melt index (190°C with 2.16 kg weight) from 0.1 to 100 g/10 min.

In other embodiments, the thermoplastic resin may have a crystallinity of less than 50 percent. In preferred embodiments, the crystallinity of the base polymer may be from 5 to 35 percent. In more preferred embodiments, the crystallinity may range from 7 to 20 percent.

In certain other embodiments, the thermoplastic resin is a semi-crystalline polymer and may have a melting point of less than 110°C. In preferred embodiments, the melting point may be from 25 to 100°C. In more preferred embodiments, the melting point may be between 40 and 85°C.

In other embodiments, the thermoplastic resin is a glassy polymer and may have a glass transition temperature of less than 110°C. In preferred embodiments, the glass transition temperature may be from 20 to 100°C. In more preferred embodiments, the glass transition temperature may be from 50 to 75°C.

In certain embodiments, the thermoplastic resin may have a weight average molecular weight greater than 10,000 g/mole. In other embodiments, the weight average molecular weight may be from 20,000 to 150,000 g/mole; in yet other embodiments, from 50,000 to 100,000 g/mole.

The one or more thermoplastic resins may be contained within the aqueous dispersion in an amount from about 1% by weight to about 96% by weight. For instance, the thermoplastic resin may be present in the aqueous dispersion in an amount from about 10% by weight to about 60% by weight, and about 20% to about 50% by weight in another embodiment.

In a particular embodiment, the polyolefin resin may include copolymers and interpolymers of ethylene and/or propylene and other monomers selected from $C_4$ to $C_{10}$ olefins, preferably alpha-olefins, more preferably from $C_4$ to $C_8$ alpha-olefins and most preferably selected from *n*-butene, *n*-hexene and n-octene. The ethylene or propylene content of the resin may range from about 2 to 98 weight percent of the resin. In some embodiments, a primarily ethylene-based polyolefin may be selected in which ethylene comprises from about 98 to 50 weight percent of the polyolefin. In other embodiments, a primarily propylene-based or other polyolefin may be selected in which propylene comprises from about 98 to 50 percent of the polyolefin. Selected comonomer(s) may comprise the remainder of the polyolefin.

In one embodiment, the polyolefin resin may include an ethylene-based polyolefin which has a melt index ("MI") determined according to ASTM D1238 (190°C with a 2.16 kg weight) from about 0.1 to 25g/10min; from 0.25 to 22 g/10 min in another embodiment; and from about 0.5 to 18 g/10min in yet another embodiment. In another embodiment, the polyolefin resin may include a propylene-based polyolefin which has a Melt Flow Rate ("MFR") determined according to ASTM D1238 (230°C with 2.16 kg weight) of from about 0.25 to 85 g/10min; from about 0.7 to 70 g/10min in another embodiment; from about 1.4 to 60 in yet another embodiment; and from about 2 to 50 g/10min in yet another embodiment.

In one embodiment, the polyolefin resin may comprise an ethylene-based polyolefin having a density ranging from about 0.855 to 0.925 g/cc; from about 0.86 to 0.91 in another embodiment; from about 0.875 to 0.905 in yet another embodiment; and from about 0.86 to 0.90 in yet another embodiment.

One class of polyolefins particularly suited for use herein are copolymers of ethylene and 1-octene or 1-butene, where ethylene comprises from about 50 to 90 percent by weight of the copolymer in one embodiment, and from about 55 to 85 percent by weight of the copolymer in another embodiment and 1-octene or 1-butene comprises from about 10 to 50 percent by weight of the copolymer in one embodiment and from about 15 to 45 percent by weight of the copolymer in another example, and where the ethylene copolymer has a Melt Index ranging from about 0.25 to 30 g/10min in one embodiment, and 0.5 to 20 g/10min in another embodiment.

Another preferred class of polyolefins includes copolymers of 1-propene and ethylene, 1-octene, 1-hexene or 1-butene, where 1-propene comprises from about 65 to 95 percent by weight of the copolymer in one embodiment in one embodiment, and from about 75 to 93 percent by weight of the copolymer in another embodiment and ethylene, 1-octene, 1-hexene or 1-butene comprise from about 5 to 35 percent by weight of the copolymer in one embodiment, and from about 7 to 25 percent by weight of the copolymer in another embodiment, and wherein the copolymer has a Melt Flow ranging from about 0.7 to 85 g/10min in one embodiment and from about 1.4 to 55 g/10min in another embodiment.

Ethylene-based polymers (including homopolymers, copolymer, interpolymers and block interpolymers) useful in embodiments disclosed herein may have a melting temperature ($T_m$) between 25°C and 130°C. In other embodiments, the ethylene-based polymers may have a melting point of less than 125°C; less than 115°C in other embodiments; less than 105°C in other embodiments; less than 95°C in other embodiments; less than 85°C in other embodiments; less than 75°C in other embodiments; less than 65°C in other embodiments; and less than 60°C in yet other embodiments.

Ethylene-based polymers useful in embodiments disclosed herein may have a Vicat softening point (ASTM D 1525) between 25°C and 130°C. In other embodiments, the ethylene-based polymers may have a Vicat softening point of less than 125°C; less than 115°C in other embodiments; less than 105°C in other embodiments; less than 95°C in other embodiments; less than 85°C in other embodiments; less than 75°C in other embodiments; less than 65°C in other embodiments; and less than 60°C in yet other embodiments; less than 55°C in other embodiments; and less than 45°C in yet other embodiments.

Ethylene-based polymers useful in embodiments disclosed herein may have a heat deflection temperature under load (DTUL) (ASTM D648, 0.45 MPa load) of at least 45°C. In other embodiments, the ethylene-based polymers may have a DTUL between 45°C and 130°C. In other embodiments, the ethylene-based polymers may have a DTUL between about 65°C and about 120°C; and between about 75°C and about 110°C in other embodiments.

Propylene-based polymers (including homopolymers, copolymer, interpolymers and block interpolymers) useful in embodiments disclosed herein may have a melting temperature ($T_m$) between 25°C and 165°C. In other embodiments, the propylene-based polymers may have a melting point of less than 135°C; less than 125°C in other embodiments; less than 115°C in other embodiments; less than 105°C in other embodiments; less than 95°C in other embodiments; less than 90°C in other embodiments; less than 85°C in other embodiments; less than 75°C in other embodiments; less than 65°C in other embodiments; and less than 60°C in yet other embodiments.

Propylene-based polymers useful in embodiments disclosed herein may have a Vicat softening point (ASTM D 1525) between 25°C and 160°C. In other embodiments, the propylene-based polymers may have a Vicat softening point of less than 135°C; less than 125°C in other embodiments; less than 115°C in other embodiments; less than 105°C in other embodiments; less than 95°C in other embodiments; less than 90°C in other embodiments; less than 85°C in other embodiments; less than 75°C in other embodiments; less than 65°C in other embodiments; less than 55°C in other embodiments; and less than 45°C in yet other embodiments.

Propylene-based polymers useful in embodiments disclosed herein may have a heat deflection temperature under load (DTUL) (ASTM D648, 0.45 MPa load) of at least 45°C. In other embodiments, the propylene-based polymers may have a DTUL between 45°C and 130°C. In other embodiments, the ethylene-based polymers may have a DTUL between about 65°C and about 120°C; and between about 75°C and about 110°C in other embodiments.

Polymers suitable for blending with the above described polymers include thermoplastic and non-thermoplastic polymers including natural and synthetic polymers. Exemplary polymers for blending include ethylene-vinyl acetate (EVA), ethylene/ vinyl alcohol copolymers, polystyrene, impact modified polystyrene, ABS, styrene/butadiene block copolymers and hydrogenated derivatives thereof (SBS and SEBS), and thermoplastic polyurethanes.

Suitable conventional block copolymers which may be blended with the polymers disclosed herein may possess a Mooney viscosity (ML 1+4 @ 100°C.) in the range from 10 to 135 in some embodiments; from 25 to 100 in other embodiments; and from 30 to 80 in yet other embodiments. Suitable polyolefins especially include linear or low density polyethylene, polypropylene (including atactic, isotactic, syndiotactic and impact modified versions thereof) and poly(4-methyl-1-pentene). Suitable styrenic polymers include polystyrene, rubber modified polystyrene (HIPS), styrene/acrylonitrile copolymers (SAN), rubber modified SAN (ABS or AES) and styrene maleic anhydride copolymers.

Dispersion Stabilizing Agent

Embodiments disclosed herein use a stabilizing agent to promote the formation of a stable dispersion or emulsion. In select embodiments, the stabilizing agent may be a surfactant, a polymer (different from the thermoplastic resin or base polymer detailed above), or mixtures thereof In other embodiments, the resin is a self-stabilizer, so that an additional exogenous stabilizing agent may not be necessary. For example, a self-stabilizing system may include a partially hydrolyzed polyester, where by combining polyester with an aqueous base, a polyester resin and surfactant-like stabilizer molecule may be produced. In particular, the stabilizing agent may be used as a dispersant, a surfactant for the frothing of a foam formed from the dispersion, or may serve both purposes. In addition, one or more stabilizing agents may be used in combination.

In certain embodiments, the stabilizing agent may be a polar polymer, having a polar group as either a comonomer or grafted monomer. In preferred embodiments, the stabilizing agent may include one or more polar polyolefins, having a polar group as either a comonomer or grafted monomer. Typical polymers include ethylene-acrylic acid (EAA) and ethylene-methacrylic acid copolymers, such as those available under the trademarks PRIMACOR™ (trademark of The Dow Chemical Company), NUCREL™ (trademark of E.I. DuPont de Nemours), and ESCOR™ (trademark of ExxonMobil) and described in U.S. Pat. Nos. 4,599,392, 4,988,781, and 5,938,437, each of which is incorporated herein by reference in its entirety. Other suitable polymers include ethylene ethyl acrylate (EEA) copolymer, ethylene methyl methacrylate (EMMA), and ethylene butyl acrylate (EBA). Other ethylene-carboxylic acid copolymer may also be used. Those having ordinary skill in the art will recognize that a number of other useful polymers may also be used.

If the polar group of the polymer is acidic or basic in nature, the stabilizing agent polymer may be partially or fully neutralized with a neutralizing agent to form the corresponding salt. In certain embodiments, neutralization of the stabilizing agent, such as a long chain fatty acid or EAA, may be from 25 to 200% on a molar basis; from 50 to 110% on a molar basis in other embodiments. For example, for EAA, the neutralizing agent is a base, such as ammonium hydroxide or potassium hydroxide, for example. Other neutralizing agents can include lithium hydroxide or sodium hydroxide, for example. Those having ordinary skill in the art will appreciate that the selection of an appropriate neutralizing agent depends on the specific composition formulated, and that such a choice is within the knowledge of those of ordinary skill in the art.

Where a polymeric stabilizing agent is used, the polymeric stabilizing agent may have a molecular weight of between 5000 and 125000 in some embodiments. In other embodiments, the polymeric stabilizing agent may have a molecular weight between about 5000 and about 45000. In still other embodiments, the polymeric stabilizing agent may have a molecular weight less than half that of the thermoplastic resin.

Other stabilizing agents that may be used include long chain fatty acids or fatty acid salts having from 12 to 60 carbon atoms. In other embodiments, the long chain fatty acid or fatty acid salt may have from 12 to 40 carbon atoms. The salts may be alkali metal or ammonium salts of the fatty acid, prepared by neutralization of the acid with the corresponding base, e.g., NaOH, KOH, $NH_4OH$, and amines, such as ethanol amine, triethanol amine, and the like. These salts may be formed in situ in the dispersion step, as described more fully below. The appropriate fatty acid stabilizing agent may be selected to serve as a dispersant for the extrusion melt step in order to attain the desired average size of the particles, which in one embodiment is between about 0.2 and 25 microns and between about 0.5 and 10 microns in another embodiment. In another embodiment, the polyolefin particles may range in size from 0.5 to 1.5 microns.

Additional stabilizing agents that may be useful include cationic surfactants, anionic surfactants, or a non-ionic surfactants. Examples of anionic surfactants include sulfonates, carboxylates, and phosphates. Examples of cationic surfactants include quaternary amines. Examples of non-ionic surfactants include block copolymers containing ethylene oxide and silicone surfactants. Surfactants useful as a stabilizing agent may be either external surfactants or internal surfactants. External surfactants are surfactants that do not become chemically reacted into the polymer during dispersion preparation. Examples of external surfactants useful herein include salts of dodecyl benzene sulfonic acid and lauryl sulfonic acid salt. Internal surfactants are surfactants that do become chemically reacted into the polymer during dispersion preparation. An example of an internal surfactant useful herein includes 2,2-dimethylol propionic acid and its salts.

In particular embodiments, the dispersing agent or stabilizing agent may be used in an amount ranging from greater than zero to about 60% by weight based on the amount of base polymer (or base polymer mixture) used. For example, long chain fatty acids or salts thereof may be used from 0.5 to 10% by weight based on the amount of base polymer. In other embodiments, ethylene-acrylic acid or ethylene-methacrylic acid copolymers may be used in an amount from 0.5 to 60% by weight based on the amount of the base polymer. In yet other embodiments, sulfonic acid salts may be used in an amount from 0.5 to 10% by weight based on the amount of base polymer.

As discussed above, more than one stabilizing agent may be used, and combinations may be used as a dispersant and as a surfactant, for example. One of ordinary skill in the art will recognize that the stabilizing agent used to create a relatively stable aqueous dispersion of polyolefin resin particles may vary depending on the nature of the polyolefin particles employed. Additionally, the stabilizing agent used may be the same or different than the frothing surfactant used in the preparation of a froth from the dispersion.

**Froth Stabilizing Surfactants**

As discussed above, the coated or impregnated substrate may in some embodiments be contacted with a froth or foam formed from dispersions disclosed herein. Embodiments disclosed herein may use a froth stabilizing surfactant to promote the formation of a stable dispersion and to aid in frothing. Creating and stabilizing the froth during the frothing and drying steps may be accomplished by addition of a frothing surfactant to the aqueous dispersion of the polyolefin resin when initially creating the froth. In addition, these surfactants may also be used to improve aqueous wetting of dried foams, if desired. Suitable frothing surfactants may be selected from cationic, nonionic and anionic surfactants. In one embodiment, an anionic surfactant may be used.

In some embodiments, the frothing surfactant may be an alkylcellulose ethers, hydroxyalkyl cellulose ethers, hydroxyalkyl alkylcellulose ethers, guar gum, xanthan gum, and polyoxyethylene resins of at least 20,000 molecular weight, or combinations thereof Other suitable frothing surfactants may be selected from cationic surfactants, anionic surfactants, or a non-ionic surfactants. Examples of cationic surfactants include quaternary amines, primary amine salts, diamine salts, and ethoxylated amines. Examples of non-ionic surfactants include block copolymers containing ethylene oxide, silicone surfactants, alkylphenol ethoxylates, and linear and secondary alcohol ethoxylates of alkyl group containing more than 8 carbon atoms.

Examples of anionic surfactants include sulfonates, carboxylates, and phosphates. In one embodiment, anionic surfactants useful in preparing the froth from the aqueous dispersion may be selected from carboxylic acid salts and ester amides of carboxylic fatty acids, preferably fatty acids comprising from 12-36 carbon atoms, e.g., stearic or lauric acid, palmitic, myristic, oleic, linoleic, ricinoleic, erucic acid and the like.

In some embodiments, the surfactant may include amphoteric surfactants such as aminopropionates, amphoteric sulfonates, betaines, imidazoline based amphoterics, and sultaines, among others. For example, the surfactant may be derived from an imidazoline and can either be the acetate form (containing salt) or the propionate form (salt-free). Examples of suitable amphoteric surfactants include surfactants such as lauramidopropyl betaine, sodium laurimino dipropionate, cocoamidopropyl hydroxyl sultaine, alkylether hydroxypropyl sultaine, sodium capryloampho hydroxypropyl sulfonate, disodium capryloampho dipropionate, sodium cocoamphoacetate, disodium cocoamphodiacetate, sodium cocoamphopropionate, disodium octyl iminodipropionate, sodium cocoampho hydroxypropyl sulfonate, disodium lauryl iminodipropionate, sodium stearoampho acetate, and disodium tallow iminodipropionate, among others. Other amphoteric surfactants known in the art may also be used.

Surfactants useful as a froth stabilizing agent may be either external surfactants or internal surfactants. External surfactants are surfactants that do not become chemically reacted into the polymer during dispersion preparation. Examples of external surfactants useful herein include salts of dodecyl benzene sulfonic acid and lauryl sulfonic acid salt. Internal surfactants are surfactants that do become chemically reacted into the polymer during dispersion preparation. An example of an internal surfactant useful herein includes 2,2-dimethylol propionic acid and its salts.

Surfactants useful for preparing a stable froth may also be referred to herein as foam stabilizers. Those having ordinary skill in this field will recognize that a number of foam stabilizers may be used. Foam stabilizers may include, for example, sulfates, succinamates, and sulfosuccinamates.

Additives

Other conventional additives can be included with our dispersion to form a coating composition. These include, but are not limited to, fillers, flame retardants (such as calcium carbonate, aluminum trihydrate (ATH), and magnesium hydroxide), stabilizers, pigments and dyes, mold release agents, and anti-stat agents. Other polymer or cellulosic based fiber compositions may be used in combination with the glass fibers.

Additives may be combined with the dispersion, or with the thermoplastic resins, stabilizing agents, or fillers used in the dispersion. For example, additives may include a wetting agent, fire retardants, surfactants, anti-static agents, antifoam agent, anti block, wax-based dispersion, pigments, a neutralizing agent, a thickener, a compatibilizer, a brightener, a rheology modifier, a biocide, a fungicide, reinforcing fibers, and other additives known to those skilled in the art. While optional for purposes of the present invention, other components may be highly advantageous for product stability during and after the manufacturing process.

Additives and adjuvants may be included in any formulation comprising the above described polymers, copolymers, interpolymers, and multi-block interpolymers. Suitable additives include fillers, such as organic or inorganic particles, including clays, talc, titanium dioxide, zeolites, powdered metals, organic or inorganic fibers, including carbon fibers, silicon nitride fibers, steel wire or mesh, and nylon or polyester cording, nano-sized particles, clays, and so forth; tackifiers, oil extenders, including paraffinic or napthelenic oils; and other natural and synthetic polymers, including other polymers according to embodiments of the present disclosure. Thermoplastic compositions according to other embodiments of the present disclosure may also contain organic or inorganic fillers or other additives such as starch, talc, calcium carbonate, polymeric fibers (including nylon, rayon, cotton, polyester, and polyaramide), metal fibers, flakes or particles, expandable layered silicates, phosphates or carbonates, such as clays, mica, silica, alumina, aluminosilicates or aluminophosphates, carbon whiskers, carbon fibers, nanoparticles including nanotubes, wollastonite, graphite, zeolites, and ceramics, such as silicon carbide, silicon nitride or titania. Silane-based or other coupling agents may also be employed for better filler bonding.

The polymers and polymer blend compositions described above may contain processing oils, plasticizers, and processing aids. Rubber processing oils having a certain ASTM designation and paraffinic, napthenic or aromatic process oils are all suitable for use. Generally from 0 to 150 parts, more preferably 0 to 100 parts, and most preferably from 0 to 50 parts of processing oils, plasticizers, and/or processing aids per 100 parts of total polymer are employed. Higher amounts of oil may tend to improve the processing of the resulting product at the expense of some physical properties. Additional processing aids include conventional waxes, fatty acid salts, such as calcium stearate or zinc stearate, (poly) alcohols including glycols, (poly)alcohol ethers, including glycol ethers, (poly)esters, including (poly)glycol esters, and metal salt-, especially Group 1 or 2 metal or zinc-, salt derivatives thereof.

For conventional TPO, TPV, and TPE applications, carbon black is one additive useful for UV absorption and stabilizing properties. Representative examples of carbon blacks include ASTM N110, N 121, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and average pore volumes ranging from 10 to 150 cm$^3$/100 g. Generally, smaller particle sized carbon blacks are employed, to the extent cost considerations permit. For many such applications the present polymers and blends thereof require little or no carbon black, thereby allowing considerable design freedom to include alternative pigments or no pigments at all.

Compositions, including thermoplastic blends according to embodiments of the invention may also contain anti-ozonants or anti-oxidants that are known to a rubber chemist of ordinary skill. The anti-ozonants may be physical protectants such as waxy materials that come to the surface and protect the part from oxygen or ozone or they may be chemical protectors that react with oxygen or ozone. Suitable chemical protectors include styrenated phenols, butylated octylated phenol, butylated di(dimethylbenzyl) phenol, p-phenylenediamines, butylated reaction products of p-cresol and dicyclopentadiene (DCPD), polyphenolic anitioxidants, hydroquinone derivatives, quinoline, diphenylene antioxidants, thioester antioxidants, and blends thereof. Some representative trade names of such products are WINGSTAY™ S antioxidant, POLYSTAY™ 100 antioxidant, POLYSTAY™ 100 AZ antioxidant, POLYSTAY™ 200 antioxidant, WINGSTAY™ L antioxidant, WINGSTAY™ LHLS antioxidant, WINGSTAY™ K antioxidant, WINGSTAY™ 29 antioxidant, WINGSTAY™ SN-1 antioxidant, and IRGANOX™ antioxidants. In some applications, the anti-oxidants and anti-ozonants used will preferably be non-staining and non-migratory.

For providing additional stability against UV radiation, hindered amine light stabilizers (HALS) and UV absorbers may be also used. Suitable examples include TINUVIN™ 123, TINUVIN™ 144, TINUVIN™ 622, TINUVIN™ 765, TINUVIN™ 770, and TINUVIN™ 780, available from Ciba Specialty Chemicals, and CHEMISORB™ T944, available from Cytex Plastics, Houston TX, USA. A Lewis acid may be additionally included with a HALS compound in order to achieve superior surface quality, as disclosed in U.S. Patent No. 6,051,681. Other embodiments may include a heat stabilizer, such as IRGANOX™ PS 802 FL, for example.

For some compositions, additional mixing processes may be employed to pre-disperse the heat stabilizers, anti-oxidants, anti-ozonants, carbon black, UV absorbers, and/or light stabilizers to form a masterbatch, and subsequently to form polymer blends therefrom.

Suitable crosslinking agents (also referred to as curing or vulcanizing agents) for use herein include sulfur based, peroxide based, or phenolic based compounds. Examples of the foregoing materials are found in the art, including in U.S. Patents No.: 3,758,643, 3,806,558, 5,051,478, 4,104,210, 4,130,535, 4,202,801, 4,271,049, 4,340,684, 4,250,273, 4,927,882, 4,311,628 and 5,248,729.

When sulfur based curing agents are employed, accelerators and cure activators may be used as well. Accelerators are used to control the time and/or temperature required for dynamic vulcanization and to improve the properties of the resulting cross-linked article. In one embodiment, a single accelerator or primary accelerator is used. The primary accelerator(s) may be used in total amounts ranging from about 0.5 to about 4, preferably about 0.8 to about 1.5 phr, based on total composition weight. In another embodiment, combinations of a primary and a secondary accelerator might be used with the secondary accelerator being used in smaller amounts, such as from about 0.05 to about 3 phr, in order to activate and to improve the properties of the cured article. Combinations of accelerators generally produce articles having properties that are somewhat better than those produced by use of a single accelerator. In addition, delayed action accelerators may be used which are not affected by normal processing temperatures yet produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. Certain processing aids and cure activators such as stearic acid and ZnO may also be used. When peroxide based curing agents are used, co-activators or coagents may be used in combination therewith. Suitable coagents include trimethylolpropane triacrylate (TMPTA), trimethylolpropane trimethacrylate (TMPTMA), triallyl cyanurate (TAC), triallyl isocyanurate (TAIC), among others. Use of peroxide crosslinkers and optional coagents used for partial or complete dynamic vulcanization are known in the art and disclosed for example in the publication, "Peroxide Vulcanization of Elastomer", Vol. 74, No 3, July-August 2001.

When the polymer composition is at least partially crosslinked, the degree of crosslinking may be measured by dissolving the composition in a solvent for specified duration, and calculating the percent gel or unextractable component. The percent gel normally increases with increasing crosslinking levels. For cured articles according to **embodiments of the invention, the percent gel content is desirably in the range from 5 to 100 percent.**

**In some embodiments, additives may also include perfumes, algae inhibitors, anti-microbiological and anti-fungus agents, flame retardants and halogen-free flame retardants, as well as slip and anti-block additives. Other embodiments may include PDMS to decrease the abrasion resistance of the polymer. Adhesion of the polymer to the sand may also be improved through the use of adhesion promoters or functionalization or coupling of the< polymer with organosilane, polychloroprene (neoprene), or other grafting agents.**

**Dispersion Formulations**

Dispersion formulations in accordance with embodiments disclosed herein may include a liquid medium, such as water, a thermoplastic resin, a dispersion stabilizing agent, and optionally a filler. With respect to the thermoplastic resin and the dispersion stabilizing agent, in some embodiments, the thermoplastic resin may comprise between about 30% to 99% (by weight) of the total amount of thermoplastic resin and dispersion stabilizing agent in the composition. In other embodiments, the thermoplastic resin may comprise between about 50% and about 80% (by weight) of the total amount of thermoplastic resin and dispersion stabilizing agent in the composition. In yet other embodiments, the thermoplastic resins may comprise about 70% (by weight) of the total amount of thermoplastic resin and dispersion stabilizing agent in the composition.

In one embodiment, the aqueous dispersion disclosed herein may include polyolefin resin particles ranging in size from about 0.2 to 10 microns; from about 0.5 to 5 microns in another embodiment; and from about 1 to 2 microns. Thus, in comparison to the glass-based fibers or glass-containing substrate coated or impregnated with the dispersion, the polyolefin resin particles are generally at least an order of magnitude smaller.

The thermoplastic resin and the dispersion stabilizing agent are preferably dispersed in a liquid medium, which in some embodiments is water. In some embodiments, sufficient base is added to neutralize the resultant dispersion to achieve a pH range of about 6 to about 14. In particular embodiments, sufficient base is added to maintain a pH between about 9 to about 12. Water content of the dispersion may be controlled so that the combined content of the thermoplastic resin and the dispersion stabilizing agent (solids content) is between about 1% to about 74% (by volume). In another embodiment, the solids content ranges between about 25% to about 74% (by volume). In yet another embodiment, the solid content ranges between about 30% to about 50% (without filler, by weight). In yet another embodiment, the solids content ranges is between about 40% to about 55% (without filler, by weight).

In various embodiments, a dispersion may be formed from a non-functionalized or non-polar thermoplastic resin and a functionalized or polar dispersion stabilizing agent. In some embodiments, the thermoplastic resin and the dispersion stabilizing agent may form two distinct phases within the dispersion. In other embodiments, the thermoplastic resin and the dispersion stabilizing agent may form two distinct phases when applied to a substrate. The two distinct phases may be present prior to, during, or subsequent to removal of water from the dispersion coated substrate.

Dispersions formed in accordance with embodiments disclosed herein may be characterized in having an average particle size of between about 0.3 to about 3.0 microns. In other embodiments, dispersions may have an average particle size of from about 0.8 to about 1.2 microns. "Average particle size" as used herein means the volume-mean particle size. In order to measure the particle size, laser-diffraction techniques may be employed for example. A particle size in this description refers to the diameter of the polymer in the dispersion. For polymer particles that are not spherical, the diameter of the particle is the average of the long and short axes of the particle. Particle sizes can be measured on a Beckman-Coulter LS230 laser-diffraction particle size analyzer or other suitable device.

In preferred formulations, therefore, dispersions in accordance with the present disclosure may include a thermoplastic resin, which may include at least one non-polar polyolefin described above, a dispersion stabilizing agent, which may include at least one polar polyolefin, and optionally a filler. With respect to the thermoplastic resin and the dispersion stabilizing agent, in preferred embodiments, the at least one non-polar polyolefin may comprise between about 30% to 99% (by weight) of the total amount of base polymer and dispersion stabilizing agent in the composition. More preferably, the at least one non-polar polyolefin comprises between about 50% and about 80%. Still more preferably, the one or more non-polar polyolefins comprise about 70%.

With respect to the filler, typically, an amount greater than about 0 to about 1000 parts per hundred of the combined amount of thermoplastic resin and dispersion stabilizing agent is used. In selected embodiments, between about 50 to 250 parts per hundred are used; between about 10 to 500 parts per hundred in other embodiments; between about 20 to 400 parts per hundred in other embodiments; and between about 0 to about 200 parts per hundred in yet other embodiments.

In certain embodiments, a structure or textile, such as a glass-based fiber or a glass-containing substrate, coated or impregnated with a compound may have a combined amount of the at least one thermoplastic resin and the dispersion stabilizing agent in the range of about 0.1 to about 150 parts per hundred parts by weight of the structure or textile. In other embodiments, a structure or textile impregnated with a compound may have a combined amount of the at least one polymer and the dispersion stabilizing agent in the range of about 0.5 to about 10 parts per hundred parts by weight of the structure or textile; and from about 1.0 to about 8.0 parts in other embodiments.

Dispersion formulations disclosed herein may include surfactants, frothing agents, dispersants, thickeners, fire retardants, pigments, antistatic agents, reinforcing fibers, antioxidants, a neutralizing agent, a rheology modifier, preservatives, biocides, acid scavengers, a wetting agent, and the like. While optional for purposes of the present invention, other components may be highly advantageous for product stability during and after the manufacturing process.

In addition, embodiments of the dispersions optionally include a filler wetting agent. A filler wetting agent generally may help make the filler and the polyolefin dispersion more compatible. Useful wetting agents include phosphate salts, such as sodium hexametaphosphate. A filler wetting agent can be included in a composition of the present invention at a concentration of at least about 0.5 part per 100 parts of filler, by weight.

Furthermore, embodiments of the dispersion may optionally include a thickener. Thickeners may be useful to increase the viscosity of low viscosity dispersions. Thickeners suitable for use may be any known in the art such as for instance poly-acrylate type or associate non-ionic thickeners such as modified cellulose ethers. For example, suitable thickeners include ALCOGUM™ VEP-II (trade name of Alco Chemical Corporation), RHEOVIS™ and VISCALEX™ (trade names of Ciba Ceigy), UCAR® Thickener 146, or ETHOCELL™ or METHOCELL™ (trade names of the Dow Chemical Company) and PARAGUM™ 241 (trade name of Para-Chem Southern, Inc.), or BERMACOL™ (trademark of Akzo Nobel) or AQUALON™ (trademark of Hercules) or ACUSOL® (trademark of Rohm and Haas). Thickeners may be used in any amount necessary to prepare a dispersion of desired viscosity.

The ultimate viscosity of the dispersion is, therefore, controllable. Addition of the thickener to the dispersion including the amount of filler may be performed with conventional means to result in viscosities as needed. Viscosities of thus dispersions may reach +3000 cP (Brookfield spindle 4 with 20 rpm) with moderate thickener dosing (up to 4 % preferably, below 3% based on 100phr of polymer dispersion). The starting polymer dispersion as described may have an initial viscosity prior to formulation with fillers and additives between 20 and 1000 cP (Brookfield viscosity measured at room temperature with spindle RV3 at 50 rpm). Still more preferably, the starting viscosity of the dispersion maybe between about 100 to about 600 cP.

Also, embodiments of the present disclosure may be characterized by their stability when a filler is added to the thermoplastic resin / dispersion stabilizing agent mixture. In this context, stability refers to the stability of viscosity of the resultant aqueous polyolefin dispersion. In order to test the stability, the viscosity is measured over a period of time. Preferably, viscosity measured at 20°C should remain +/- 10% of the original viscosity over a period of 24 hours, when stored at ambient temperature.

In a specific embodiment, a thermoplastic resin and a dispersion stabilizing agent are melt-kneaded in an extruder along with water and a neutralizing agent, such as ammonia, potassium hydroxide, or a combination of the two to form a dispersion. Those having ordinary skill in the art will recognize that a number of other neutralizing agents may be used. In some embodiments, a filler may be added during or after blending the thermoplastic resin and dispersion stabilizing agent.

Any melt-kneading means known in the art may be used. In some embodiments, a kneader, a BANBURY® mixer, single-screw extruder, or a multi-screw extruder is used. A process for producing the dispersions in accordance with the present invention is not particularly limited. One preferred process, for example, is a process comprising melt-kneading the above-mentioned components according to U.S. Patent No. 5,756,659 and U.S. Patent No. 6,455,636.

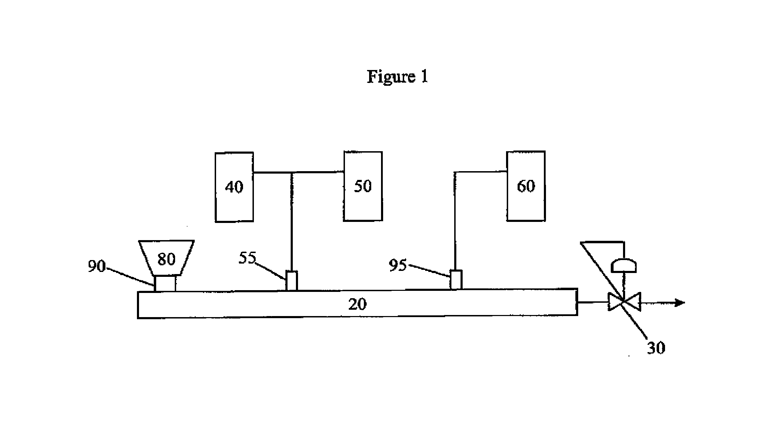

Figure 1 schematically illustrates an extrusion apparatus that may be used in embodiments of the invention. An extruder 20, in certain embodiments a twin screw extruder, is coupled to a back pressure regulator, melt pump, or gear pump 30. Embodiments also provide a base reservoir 40 and an initial water reservoir 50, each of which includes a pump (not shown). Desired amounts of base and initial water are provided from the base reservoir 40 and the initial water reservoir 50, respectively. Any suitable pump may be used, but in some embodiments a pump that provides a flow of about 150 cc/min at a pressure of 240 bar is used to provide the base and the initial water to the extruder 20. In other embodiments, a liquid injection pump provides a flow of 300 cc/min at 200 bar or 600 cc/min at 133 bar. In some embodiments, the base and initial water are preheated in a preheater.

Resin in the form of pellets, powder or flakes is fed from the feeder 80 to an inlet 90 of the extruder 20 where the resin is melted or compounded. In some embodiments, the dispersion stabilizing agent is added to the thermoplastic resin through and along with the resin, and in other embodiments, the dispersion stabilizing agent is provided separately to the twin screw extruder 20. The resin melt is then delivered from the mix and convey zone to an emulsification zone of the extruder where the initial amount of water and base from the reservoirs 40 and 50 is added through inlet 55. In some embodiments, dispersion stabilizing agent may be added additionally or exclusively to the water stream. In some embodiments, the emulsified mixture is further diluted with additional water inlet 95 from reservoir 60 in a dilution and cooling zone of the extruder 20. Typically, the dispersion is diluted to at least 30 weight percent water in the cooling zone. In addition, the diluted mixture may be diluted any number of times until the desired dilution level is achieved. In some embodiments, water is not added into the twin screw extruder 20 but rather to a stream containing the resin melt after the melt has exited from the extruder. In this manner, steam pressure build-up in the extruder 20 is eliminated.

Advantageously, by using an extruder in certain embodiments, the thermoplastic resin and the dispersion stabilizing agent may be blended in a single process to form a dispersion. Also, advantageously, by using one or more of the dispersion stabilizing agents listed above, the dispersion may be stable with respect to the filler and other additives.

**Coating and Impregnation**

Polyolefin dispersions formed in accordance with embodiments disclosed herein provide the ability to coat, partially coat, apply the dispersion to, or impregnate the dispersion into glass-based fibers and glass-containing substrates, films, sheets, fabrics, or other glass-based articles. Polyolefin dispersions formed in accordance with embodiments disclosed herein may also provide for imparting a modified property to a substrate. For example, a dispersion-coated substrate may achieve good adhesive properties while maintaining a flexible laminate.

The dispersion may be applied to various fibers including glass, polymeric, and cellulosics, and articles such as mats, nonwovens, wovens, and fabrics made from such fibers. Glass-fiber articles include, but are not limited to woven rovings, wet chopped strands, unidirectional and multi-directional fabrics (biaxial, triaxial, quadraxial), paper dry chop, molding mats, insulation, double bias fabrics, continuous strand mats, chopped strand mats, veils, and chopped strands. The glass type used may be any of the standard silicon-based glasses known in the art, such as E-glass, a low alkali glass.

In some embodiments, a polyolefin dispersion or dispersion compound (a dispersion containing a filler) may be applied to a fibrous structure using any application method known to those skilled in the art. In other embodiments, a fibrous structure may be impregnated with a dispersion or a dispersion compound. In certain embodiments, fibrous structures may include textiles, geotextiles, and natural fibers. In certain embodiments, the fibrous structure may include cotton, wool, synthetic wool, cellulosics including rayon, synthetic fibers of polyamide, polyacrylonitrile, polyvinyl chloride, polyvinylidene chloride, polypropylenes, polyesters, or combinations thereof. In other embodiments, the fibrous structure may be flax, hemp, cellulose, pulp, wood, or combinations thereof. In other embodiments, the fibrous structures described above may be glass-reinforced. In yet other embodiments, the fibrous structure may be a glass-based fiber or a glass-containing substrate or textile.

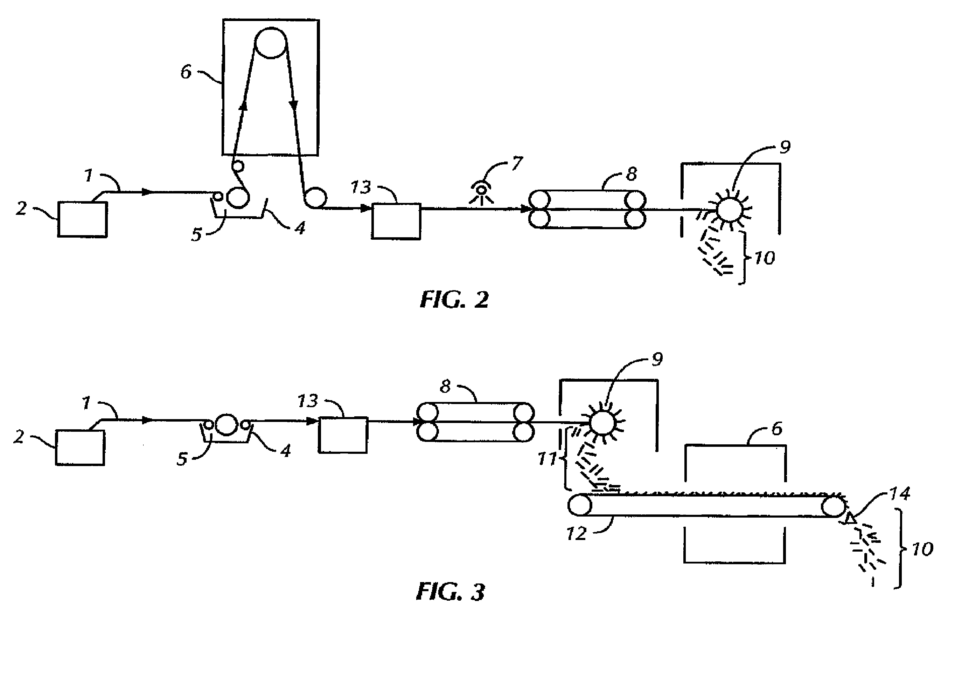

For example, in the method as practiced in Figure 2, a continuous fiber strand, or roving, **1** is fed from a supply reel **2** through a bath **4** containing an aqueous melt-kneaded thermoplastic dispersion **5** forming a coated strand. The coated strand is air dried or optionally passed through a heat source such as an oven **6** in which the water of the dispersion is driven off, i.e., the strand is dried, and/or the thermoplastic resin is fused. The coated strand after solidification of the thermoplastic resin may optionally pass near one or more heaters **7** where the strand is further dried and/or the temperature of the strand is raised, when required to an appropriate temperature wherein it will be ready for pelletizing in unit **9** to form pellets of the long fiber-reinforced thermoplastic concentrate of the present disclosure. The strand may be drawn through the apparatus by the pelletizing unit **9** or optionally, a draw-off device **8.** Optionally, the coated strand may be passed through a shaping device **13** at any point between the bath **4** and the pelletizing unit **9.**

Alternatively, in the method as practiced in Figure 3, a continuous fiber strand, or roving, **1** is fed from a supply reel **2** through a bath **4** containing an aqueous melt-kneaded thermoplastic dispersion **5.** The coated strand is next passed through a pelletizer **9,** or other chopping device, comminuting the coated strand into pre-dried pellets **11** which fall onto a conveyer belt **12** which allows for the pre-dried pellets to air dry or optionally passes the pre-dried pellets **11** through a heat source such as an oven **6** in which the water of the dispersion may ben off, i.e., the pre-dried pellets **11** are dried, and/or the thermoplastic resin is fused providing pellets **10** of the long fiber-reinforced thermoplastic concentrates of the invention. If necessary, the dried pellets may be scraped from the conveyer belt by a scraper **14.** The strand may be drawn through the apparatus by the pelletizing unit **9** or optionally, a draw-off device **8.**

Optionally, the coated strand may be passed through a shaping device **13** at any point between the bath 4 and the pelletizing unit **9.** Any method to transport the predried pellets **11** to the oven **6** is acceptable, for example, conveyer belts or pneumatic transportation systems.

In some embodiments, at least a portion of the water in the dispersion applied may be removed from the dispersion coated article. In other embodiments, at least 50 percent of the water in the dispersion applied may be removed.

As a process for producing the dispersion-coated or impregnated structures disclosed herein, a process other than the ones described hereinabove may be employed. For example, the fiber bundle may be cut into a prescribed length to obtain chopped strands, then a thermoplastic resin dispersion may be coated on the chopped strands by a method such as spraying, followed by heating to obtain dried and/or fused pellets.

Where it is preferred to coat, apply, or impregnate the structure with a froth or a foam prepared from a froth, a gas may be used as a frothing agent. Examples of suitable frothing agents include: gases and/or mixtures of gases such as, air, carbon dioxide, nitrogen, argon, helium, and the like. Particularly preferable is the use of air as a frothing agent. Frothing agents are typically introduced by mechanical introduction of a gas into a liquid to form a froth. This technique is known as mechanical frothing. In preparing a frothed polyolefin backing, it is preferred to mix all components and then blend the air or gas into the mixture, using equipment such as an OAKES, MONDO, or FIRESTONE frother.

**Application / Impregnation Control**

The amount or degree to which a fibrous structure is impregnated or coated with the dispersion may be controlled. For example, impregnation may be controlled by pressing the fabric between calenders, removing excess material. Impregnation may additionally be controlled, for example, by adjusting one or more of the viscosity of the compound, the concentration of the combined polymer and stabilizer in the aqueous dispersion, the speed of the substrate (fiber or textile) through the dispersion, the degree to which the excess dispersion is wiped off by a suitable mechanism such as passing the strand through a shaping device (*e.g.*, a restricting orifice), the concentration of the filler in the compound, or the polarity of the aqueous dispersion.

In certain embodiments, the coated or impregnated substrate, such as glass-based fibers or glass-containing substrates, may have a combined amount of the at least one thermoplastic resin and the dispersion stabilizing agent in the range of about 0.1 to about 10 parts per hundred by weight of the coated or impregnated substrate; 0.5 to 8 parts per hundred in other embodiments; and 1 to 6 parts per hundred in yet other embodiments. In other embodiments, the coated or impregnated substrate may contain at least 92 weight percent glass based on a total weight of the substrate, the thermoplastic resin, and the dispersion stabilizing agent; at least 94 weight percent glass in other embodiments; at least 96 weight percent glass in other embodiments; and at least 98 weight percent glass in yet other embodiments. To maintain the desired degree of coating or impregnation, for example, in certain embodiments, the thermoplastic resin may be controlled in the range from about 35 to about 55 percent by weight of the aqueous dispersion. In other embodiments, the thermoplastic resin may be controlled in the range from about 40 to about 50 percent by volume of the aqueous dispersion. In other embodiments, the viscosity of the dispersion may be controlled in the range from about 20 to about 3000 cP.

One skilled in the art will appreciate that a desirable degree or amount of impregnation may range from a partial saturation of the fibrous structure to a complete saturation of the fibrous structure. The desired degree of impregnation may depend upon variables including the nature of the material being impregnated and the nature of impregnate, for example. One skilled in the art will also appreciate that the intended end properties of the impregnated structure will influence the selection of the specific ingredients (substrates and dispersions, for example) and processing parameters.

The dispersion may be applied to the substrate, in some embodiments resulting in a coating thickness of between 0.1 microns and 10 microns. In other embodiments, the coating thickness may be at least 1 micron, at least 2 microns, or at least 5 microns.

The dispersion may be applied to the substrate, in some embodiments, resulting in a coating weight of between 1 gram per square meter of substrate surface area and 100 grams per square meter of substrate surface area.

Coating or impregnating a substrate with the dispersions described above may modify a property of the substrate. For example, a coating may provide adhesive properties to the substrate for binding with a second substrate. In some embodiments, the coated substrate may have an adhesive force of at least 0.7 lb/in when bound to a second substrate. In other embodiments, the coated substrate may have an adhesive force between 0.7 1b/in and 1.1 1b/in when bound to a second substrate. In other embodiments, the adhesive force of a coated substrate may be at least 10% greater than a binding force of an uncoated substrate. The adhesive force, as used herein, is the force required to separate the coated substrate from the second substrate.

Another example of modified properties a coating may promote or improve is compatibility of the glass-based fibers or glass-containing substrates with other materials, such as polypropylenes, nylons, and other fibers commonly used in textile applications.

As another example of modified properties, a coating or impregnation may improve the tensile strength of the glass-based fibers or glass-containing substrate. In some embodiments, the coated or impregnated substrate may have a tensile strength at least 10% greater than an uncoated or unimpregnated substrate.

In other embodiments, a coating or impregnation may serve to protect the substrate from deleterious impacts or chemical attack. In yet other embodiments, the glass-based or glass-containing articles may be formable, such that their shape may be modified subsequent to the coating or impregnation with the dispersions described above. In some embodiments, the articles may be formable using temperature and/or pressure. In certain embodiments, the thermoforming temperature of the article may be within 50°C of the melting temperature of the thermoplastic resin.

Glass-based fibers, either coated alone or as part of a glass-containing article, may have a diameter between 5 and 35 microns in some embodiments. In other embodiments, the glass-based fibers may have a diameter between 10 and 30 microns.

Coated or impregnated glass-containing articles disclosed herein, including mats, nonwovens, wovens, and fabrics may have a basis weight in the range from 25 to 1,000 g/m$^2$ in some embodiments. In other embodiments, the glass-containing articles may have a basis weight between 30 and 950 g/m$^2$. In other embodiments, the articles may have a melting point of less than 110°C.

Coated or impregnated glass-containing articles disclosed herein may be formed using the coating/binder in the dry state (coating directly onto the article/fiber) and the wet state (chopped fibers are slurried with water and the binder and later dried to form an article). The coating/binder may be applied between 0.05 and 20 percent by weight in some embodiments. In other embodiments, the coating/binder may be applied between 0.25 and 15 percent by weight; and between 0.45 and 10 percent by weight in yet other embodiments.

In other embodiments, a substrate may be coated with at least one layer of the above described dispersion. In other embodiments, the above described dispersion may be used to adhere a glass-containing article or glass-based fiber to a second substrate, such as a fabric.

In still other embodiments, a laminate may be formed where at least one layer of the above described dispersion is disposed on at least one substrate. The at least one substrate may be a glass-containing article, a glass-based fiber, a froth, a foam, a thermoplastic sheet or film, a woven or non-woven fabric, fiberglass, or a melt spunbonded or melt blown material.

In some embodiments, a laminate may be formed where at least one layer of the above described dispersion is adhered to at least one substrate. In other embodiments, the dispersions disclosed herein may be disposed between two substrate layers, which may be the same or different substrates. In some embodiments, a coated article may be immersed in or coated with a polymer.

In still other embodiments, a glass-containing article or a glass-based fiber may be coated with two or more layers of the above described dispersions. In various embodiments, the layers may be formed from the same or different dispersion, and may be of the same or different coating thicknesses or coating weights.

**Examples**

Example 1

A continuous glass roving strand (VETROTEX™ RO99 719 available from Saint-Gobain) is unwound from the outside of a standard bobbin. The roving is pulled through an aqueous melt kneaded thermoplastic dispersion as set forth in Figure 2 by a BRABENDER® film pull roll unit at a rate of 8 feet per minute (ft/min.). The aqueous dispersion comprises 80 percent by weight deionized water and 20 percent by weight solids. The solids comprise 2.35 weight percent long chain carboxylic acid surfactant and 17.65 weight percent of a propylene-rich propylene and ethylene copolymer (9 percent ethylene) having a density of 0.876 grams per cubic centimeter (g/cc) and a melt flow rate (MFR) (under conditions of 230°C and an applied load of 2.16 kilograms) of 25 grams per 10 minutes (g/10 min.). The average particle size of the dispersion is about 0.61 microns with a polydispersity of 1.31. The pH value of the melt-kneaded aqueous dispersion is 11.6. The glass roving is pulled through the bath for a distance of about 75 mm. After immersing into and exiting the bath, excess liquid is removed from the coated strand by contact with a fluoropolymer wiper. The wet strand is pulled into a forced air oven maintained at a temperature of 180°C. Inside the oven, the strand is passed over a series of pulleys and guides to provide a sufficient path length for a one minute residence time in the oven. In the oven, the water is driven off and the propylene polymer softened and fused. The dry coated strand emerges from the oven tacky due to the soften polymer coating on the glass fibers. The coated strand quickly cools in the air to a stiff, flat bundle of coated glass fibers. The flat, coated bundle of glass fibers is cut into 12 mm long glass fiber (LGF) concentrate pellets using a air-powered fiberglass chopper gun. The BRABENDER® puller is located after the oven and before the chopper gun. The glass content of this sample is determined by ashing the pellets at 550°C for two hours in a muffle furnace. The glass level is determined as the residual weight after removal of the organic coating and is 90.8 percent.

The LGF concentrate pellets (33 parts) are dry blended with 7.5 parts polypropylene homopolymer pellets (available from The Dow Chemical Company as 5E16S Polypropylene Resin, 35 MFR - "5E16S"), 7.5 parts polypropylene homopolymer pellets (available from The Dow Chemical Company as DX5E30S Polypropylene Resin, 75 MFR - "DX5E30S"), 2 parts maleic anhydride grafted polypropylene pellets (available from Crompton as POLYBOND™ 3200), and 50 parts polypropylene and ethylene copolymer pellets (available from The Dow Chemical Company as 7C54H PolyPropylene Resin, 12 MFR - "7C54H") and shaken in a plastic bag. This mixed pellet blend is placed in the feed hopper of a Toyo PLASTAR™ SI-90 plastic injection molding machine equipped with a mold containing twin drops for a standard ASTM tensile-bar and a two inch diameter optical disk. Parts are molded from this compound using a temperature profile of 395°F (202°C) closest to the hopper to 385°F (196°C) by the nozzle. The mold temperature is 100°F, the hold time is 15 seconds, and the back pressure used is 250 pounds per square inch (psi). The parts produced are off-white in color and homogeneous in appearance, with a smooth surface and no visible accumulations of glass fiber.

Example 2

Example 2 is run the same as Example 1 with the exception that the strand after exiting the oven is passed though a rounding die and cools in the air to a stiff, round strand. A Killion tube puller is utilized rather than the BRABENDER® film pull roll unit and the Killion tube puller is located after the rounding die and before the cutter. The glass level is determined to be 90.7 percent based on the weight of the long glass thermoplastic concentrate.

Example 3

Example 3 is run the same as Example 2 with the exception that the amounts of polypropylene homopolymer pellets (5E16S), polypropylene homopolymer pellets (DX5E30S), and polypropylene and ethylene copolymer pellets (7C54H) are 9, 9, and 47 weight percent, respectively. The glass level in the concentrate is determined to be 90.7 percent based on the weight of the long glass thermoplastic concentrate.

Example 4

Example 4 is run the same as Example 2 with the exception that two glass roving strands are coated. The glass level is determined to be 90.7 percent based on the weight of the long glass thermoplastic concentrate.

The compositions of the LGF concentrates of Examples 1 to 4 are listed in Table 1. The properties of molded test specimens comprising said LGF concentrates are tested according to the following test methods and the properties are reported in Table 1. Izod impact resistance as measured by the "notched" and "unnotched" Izod test is determined according to ASTM D 256-90-B at 23°C. Notched specimens are notched with a TMI 22-05 notcher to give a 0.254 mm radius notch. A 0.91 kilogram pendulum is used. The values are reported in foot pounds per inch (ft-lb/in).

"Dart" instrumented impact resistance is measured according to ASTM D 3763 on a MTS 810 instrumented impact tester at 15 miles per hour (MPH) impact. Test results are determined at 23°C. Test results are reported in inch-pounds (in-lb).

Flexural modulus ("Fm") and flexural strength ("Fs") are measured according to ASTM D 790. Test results are reported in pounds per square inch (psi).

Tensile elongation ("Te"), tensile modulus ("Tmod") and tensile strength ("Ts") are measured according to ASTM D 638. Te results are reported in percent (%) and Tm and Ts results are reported in psi.

Deflection temperature under load ("DTUL") is measured according to ASTM D 648 on unannealed samples at 264 psi (1.8 mega Pascal (MPa)). Results are reported in degrees Fahrenheit (°F).

"Ash" is measured according to ASTM D 5650 and is reported in %.

Table 1.

| Example | 1 | 2 | 3 | 4 |
|---|---|---|---|---|
| | | | | |
| **COMPONENT** | | | | |
| 7C54H | 50 | 50 | 47 | 50 |
| 5E16S | 7.5 | 7.5 | 9 | 7.5 |
| DX5E30S | 7.5 | 7.5 | 9 | 7.5 |
| LGF-Single strand-flat . | 33 | -- | -- | -- |
| LGF-Single strand-round | -- | 33 | 33 | -- |
| LGF-double strand-round | -- | -- | -- | 33 |
| POLYBOND™ 3200 | 2 | 2 | 2 | 2 |
| | | | | |
| **PROPERTY** | | | | |
| Fm, $10^5$ psi | n/a* | 7.64 | 7.68 | 7.87 |
| Fs, psi | n/a | 18,500 | 18,700 | 18,700 |
| Te, % | n/a | 3 | 3 | 3 |
| Tmod, $10^5$ psi | n/a | 7.88 | 8.05 | 6.92 |
| Ts, psi | n/a | 11,200 | 11,700 | 10,800 |
| Notched Izod, ft-lb/in | 3.2 | 4.7 | 4.7 | 5.0 |
| Unnotched Izod, ft-lb/in | n/a | 14.9 | 15.9 | 16.1 |
| | | | | |
| **DART** | | | | |
| Peak Energy, in-lb | 51 | 59 | 62 | 79 |
| Total Energy, in-lb | n/a | 301 | 301 | 303 |
| DTUL, °F | n/a | 301 | 301 | 303 |
| *n/a = not available | | | | |

Example 5

A continuous glass roving strand (VETROTEX™ RO99 719 available from Saint-Gobain) is unwound from the outside of a standard bobbin. The roving is pulled through an aqueous melt kneaded thermoplastic dispersion as set forth in Figure 2 by a BRABENDER® film pull roll unit at a rate of 8 feet per minute (ft/min). The aqueous dispersion comprises 80 percent by weight deionized water and 20 percent by weight solids. The solids comprise 2.35 weight percent long chain carboxylic acid surfactant and 17.65 weight percent of a propylene-rich propylene and ethylene copolymer (9 percent ethylene) having a density of 0.876 grams per cubic centimeter (g/cc) and a melt flow rate (MFR) (under conditions of 230°C and an applied load of 2.16 kilograms) of 25 grams per 10 minutes (g/10 min.). The average particle size of the dispersion is about 0.61 microns with a polydispersity of 1.31. The pH value of the melt-kneaded aqueous dispersion is 11.6. The glass roving is pulled through the bath for a distance of about 75 mm. After immersing into and exiting the bath, excess liquid is removed from the coated strand by contact with a fluoropolymer wiper. The wet strand is pulled into a forced air oven maintained at a temperature of 180°C. Inside the oven, the strand is passed over a series of pulleys and guides to provide a sufficient path length for a one minute residence time in the oven. In the oven, the water is driven off and the propylene polymer softened and fused. The dry coated strand emerges from the oven tacky due to the soften polymer coating on the glass fibers. The coated strand quickly cools in the air to a stiff, flat bundle of coated glass fibers. The flat, coated bundle of glass fibers is cut into 12 mm long glass fiber (LGF) concentrate pellets using a air-powered fiberglass chopper gun. The BRABENDER® puller is located after the oven and before the chopper gun. The glass content of this sample is determined by ashing the pellets at 550°C for two hours in a muffle furnace. The glass level is determined as the residual weight after removal of the organic coating and is 92.3 percent.

The LGF concentrate pellets (33 parts) are dry blended with 7.5 parts polypropylene homopolymer pellets (available from The Dow Chemical Company as 5E16S Polypropylene Resin, 35 MFR - "5E16S"), 7.5 parts polypropylene homopolymer pellets (available from The Dow Chemical Company as DX5E30S Polypropylene Resin, 75 MFR - "DX5E30S"), 2 parts maleic anhydride grafted polypropylene pellets (available from Crompton as POLYBOND™ 3200), and 50 parts polypropylene and ethylene copolymer pellets (available from The Dow Chemical Company as 7C54H Polypropylene Resin, 12 MFR - "7C54H") and shaken in a plastic bag. This mixed pellet blend is placed in the feed hopper of a Toyo PLASTAR™ SI-90 plastic injection molding machine equipped with a mold containing twin drops for a standard ASTM tensile-bar and a two inch diameter optical disk. Parts are molded from this compound using a temperature profile of 395°F (202°C) closest to the hopper to 385°F (196°C) by the nozzle. The mold temperature is 100°F, the hold time is 15 seconds, and the back pressure used is 250 pounds per square inch (psi). The parts produced are off-white in color and homogeneous in appearance, with a smooth surface and no visible accumulations of glass fiber.

Comparative Example 1

Two 100 mil sheets of an impact polypropylene copolymer (INSPIRE™ D 114.00, a propylene-ethylene copolymer having approximately 8.5 weight percent ethylene, available from The Dow Chemical Company) having a melt flow rate of 0.5 g/10 min (230°C/2.16kg) is prepared. A 10 inch by 10 inch glass fiber continuous filament mat (available from Owens Coming under the designation M8643) having a basis weight of 450 g/m$^2$ is placed between two layers of the 100 mil PP sheet. This sandwich structure is then consolidated in a press at about 500 psi and 170°C for approximately 5 minutes.

Example 6

An aqueous polyolefin dispersion comprises 80 percent by weight deionized water and 20 percent by weight solids. The solids comprise 2.35 weight percent long chain carboxylic acid surfactant and 17.65 weight percent of a propylene-rich propylene and ethylene copolymer (9 percent ethylene) having a density of 0.876 grams per cubic centimeter (g/cc) and a melt flow rate (MFR) (under conditions of 230°C and an applied load of 2.16 kilograms) of 25 grams per 10 minutes (g/10 min.). The average particle size of the dispersion is about 0.61 microns with a polydispersity of 1.31. The pH value of the melt-kneaded aqueous dispersion is 11.6. The aqueous dispersion is then diluted to a solids content of about 10 weight percent.

A 10 inch by 10 inch glass fiber continuous filament mat having a basis weight of 450 g/m$^2$ is then impregnated with the diluted dispersion by immersing the mat into the dispersion. The impregnated mat is then removed from the dispersion and excess dispersion is allowed to drip off. The wetted mat is then dried in a vertical position in a convection oven maintained at 100°C for 5 minutes. A dried coating weight of approximately 30 g/m$^2$ is achieved.

In a separate operation, a 100 mil sheet of an impact polypropylene copolymer (INSPIRE™ D 114.00, available from The Dow Chemical Company) having a melt flow rate of 0.5 g/10 min (230°C/2.16kg) is prepared. The impregnated mat is then placed between two layers of the 100 mil PP sheet. This sandwich structure is then consolidated in a press at about 500 psi and about 170°C for approximately 5 minutes. The resulting glass reinforced thermoplastic structure may be used in various applications.

When compared to Comparative Example 1, the composite product of Example 6 exhibits better mechanical properties, such as higher elongation to break, higher tensile strength, and higher impact resistance.

Example 7

An aqueous polyolefin dispersion based on a blend of an unfunctionalized PP (VERSIFY™ DP4200) and

PRIMACOR™ 5980I is prepared. VERSIFY™ DP4200 is a propylene-ethylene copolymer having an ethylene content of about 9 weight percent and a melt flow of 25 dg/min (230°C, 2.16 kg). PRIMACOR™ is an ethylene-acrylic acid copolymer having an acrylic acid content of about 20.5 weight percent and a melt flow of approximately 13.75 dg/min (125°C, 2.16 kg). The VERSIFY™ DP4200 / PRIMACOR™ 5980I dispersion is produced by simultaneously feeding DP4200 pellets at 13.9 lb/hr and 5980I pellets at 2.9 lb/hr into an extruder feed funnel. Deionized water and a 25% (w/w) aqueous solution of potassium hydroxide are pumped at 19 and 8.3 cc/min, respectively, combined, heated to about 160°C, and injected into the extruder barrel at the emulsification zone, where the barrels are operated at about 150°C. Deionized water is pumped at 90 cc/min, heated to about 110°C, and injected into the extruder barrel at the dilution section where the barrels are operated at about 80°C. Product dilution is controlled at a pressure of about 300 psig. The resulting VERSIFY™ DP4200 / PRIMACOR™ 5980I dispersion had a solids content of 51.6 weight percent, a pH of about 10.0, a volume-mean particle size of about 1.0 micron as measured by a Beckman Coulter LS 230, and a polydispersity (defined as the volume-mean particle size divided by the number mean particle size) of less than 2.

The VERSIFY™ DP4200 / PRIMACOR™ 5980I dispersion is diluted to a solids content of about 10 weight percent. A continuous glass roving strand (VETROTEX™ RO99 719 available from Saint-Gobain) is unwound from the outside of a standard bobbin. The roving is pulled through the aqueous thermoplastic dispersion by a Brabender film pull roll unit at a rate of 8 feet per minute (ft/min.). After immersing into and exiting the bath, excess liquid is removed from the coated strand by contact with a fluoropolymer wiper. The wet strand is pulled into a forced air oven maintained at a temperature of 180°C. Inside the oven, the strand is passed over a series of pulleys and guides to provide a sufficient path length for a one minute residence time in the oven. In the oven, the water is driven off and the propylene polymer softened and fused. The dry coated strand emerges from the oven tacky due to the softened polymer coating on the glass fibers. The coated strand quickly air cools to a stiff, flat bundle of coated glass fibers.

In a separate operation, the coated bundle of glass fibers is subsequently woven into a biaxial fabric using conventional weaving methods known to those skilled in the art.

In a separate operation, a 100 mil sheet of an impact polypropylene copolymer (INSPIRE™ D 114.00, available from The Dow Chemical Company) having a melt flow rate of 0.5 g/10 min (230°C/2.16kg) is prepared. The biaxial fabric is then placed between two layers of the 100 mil PP sheet. This sandwich structure is then consolidated in a press at about 500 psi and about 170°C for approximately 5 minutes. The resulting glass reinforced thermoplastic structure may be used in various applications.

Compared to Comparative Example I, the composite product of Example 7 exhibits better mechanical properties, such as higher elongation to break, higher tensile strength, and higher impact resistance. This may be due to the presence of an unfunctionalized polypropylene phase which may provide better compatibility with the impact polypropylene copolymer sheets.

Example 8

An aqueous polyolefin dispersion based on a blend of an unfunctionalized PP (VERSIFY™ DP4200) and PRIMACOR™ 5980I is prepared. The VERSIFY™ DP4200 / PRIMACOR™ 5980I dispersion is produced by simultaneously feeding DP4200 pellets at 13.9 lb/hr and 5980I pellets at 2.9 lb/hr into an extruder feed funnel. Deionized water and a 25% (w/w) aqueous solution of potassium hydroxide are pumped at 19 and 8.3 cc/min, respectively, combined, heated to about 160°C, and injected into the extruder barrel at the emulsification zone, where the barrels are operated at about 150°C. Deionized water is pumped at 90 cc/min, heated to about 1 10°C, and injected into the extruder barrel at the dilution section where the barrels are operated at about 80°C. Product dilution is controlled at a pressure of about 300 psig. The resulting VERSIFY™ DP4200 / PRIMACOR™ 5980I dispersion had a solids content of 51.6 weight percent, a pH of about 10.0, a volume-mean particle size of about 1.0 micron as measured by a Beckman Coulter LS 230, and a polydispersity (defined as the volume-mean particle size divided by the number mean particle size) of less than 2. The VERSIFY™ DP4200 / PRIMACOR™ 5980I dispersion is diluted to a solids content of about 10 weight percent.

A continuous glass roving strand is prepared using conventional glass manufacturing methods know to those skilled in the art. Upon exiting the bushing for the glass manufacturing operation, the fibers are pulled through the dilute VERSIFY™ DP4200 / PRIMACOR™ 5980I dispersion. After immersing into and exiting the bath, excess liquid is removed from the coated strand by contact with a fluoropolymer wiper. The wet strand is pulled into a forced air oven maintained at a temperature of 180°C. Inside the oven, the strand is passed over a series of pulleys and guides to provide a sufficient path length for a one minute residence time in the oven. In the oven, the water is driven off and the propylene polymer softened and fused. The dry coated strand emerges from the oven tacky due to the softened polymer coating on the glass fibers. The coated strand quickly air cools to a stiff, flat bundle of coated glass fibers.

In a separate operation, the coated bundle of glass fibers is subsequently woven into a biaxial fabric using conventional weaving methods known to those skilled in the art.

In a separate operation, a 100 mil sheet of an impact copolymer polypropylene (INSPIRE™ D 114.00, available from The Dow Chemical Company) having a melt flow rate of 0.5 g/10 min (230C/2.16kg) is prepared. The biaxial fabric is then placed between two layers of the 100 mil PP sheet. This sandwich structure is then consolidated in a press at about 500 psi and about 170°C for approximately 5 minutes. The resulting glass reinforced thermoplastic structure may be used in various applications.

Advantageously, one or more embodiments disclosed herein may provide compositions, methods, and articles having good performance in their intended applications. For example, one or more embodiments may provide fibrous structures having one or more of improved stiffness, elasticity, resilience, adhesion, shape retention or compatibility.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

Features of the invention will now be described in the following numbered clauses :

1. A method of forming an article, the method comprising:

   applying a compound to a glass-containing substrate, the compound comprising:

      an aqueous dispersion comprising:

         (a) a thermoplastic resin;
         (b) a dispersion stabilizing agent; and
         (c) water;

      removing at least a portion of the water.

2. The method of clause 1, comprising removing at least 50% of the water.

3. The method of clause 1, wherein the article is at least 92 weight percent glass based on a total weight of the substrate, the thermoplastic resin, and the dispersion stabilizing agent.

4. The method of clause 1, wherein the article is at least 94 weight percent glass based on a total weight of the substrate, the thermoplastic resin, and the dispersion stabilizing agent.

5. The dispersion of clause 1, wherein the thermoplastic resin is non-polar and the dispersion stabilizing agent is polar.

6. The method of clause 5, wherein the thermoplastic resin and dispersion stabilizing agent form two distinct phases.

7. The method of clause 1 , wherein the removing at least a portion of the water results in a coating having a thickness of between 0.1 microns and 100 microns.

8. The method of clause 1, wherein the removing at least a portion of the water results in a coating weight of between 1 gram per square meter of substrate surface area and 100 grams per square meter of substrate surface area.

9. The method of clause 1, wherein the thermoplastic resin comprises a polyethylene homopolymer, copolymer, or multiblock interpolymer, a polypropylene homopolymer, copolymer, or multiblock interpolymer, or combinations thereof.

10. The method of clause 9, wherein the thermoplastic resin is non-polar.

11. The method of clause 1, wherein the thermoplastic resin has a heat deflection temperature under load between 75°C and 110°C.

12. The method of clause 1, further comprising binding the article directly to a fabric without an adhesive.

13. An article comprising:

   a compound in contact with a portion of a glass-containing substrate, wherein the compound at the time of contacting comprised an aqueous dispersion comprising:

      (a) a polyolefin having a deformation temperature of less than 110°C;
      (b) a dispersion stabilizing agent; and

(c) water

wherein the compound imparts a modified property to the substrate; and wherein the substrate is formable.

14. The article of clause 13, wherein a thermoforming temperature of the article is within 50°C of a melting temperature of the polyolefin.

15. The article of clause 13, wherein the modified property is at least one selected from the group consisting of adhesion to a second substrate, a tensile strength, a compatibility, and an adhesive force.

16. The article of clause 15, wherein the modified property has a value at least 10% greater than the uncontacted substrate.

17. The article of clause 15, wherein the adhesive force of the article is between 0.7 and 1.1 lb/in.

18. The article of clause 13, wherein the polyolefin comprises a polyethylene homopolymer, copolymer, or multiblock interpolymer, a polypropylene homopolymer, copolymer, or multiblock interpolymer, or combinations thereof.

19. The article of clause 18, wherein the polyolefin has a heat deflection temperature under load between 75°C and 110°C.

20. The article of clause 13, wherein the glass-containing article has a basis weight in the range from 25 to 1000 grams per square meter.

21. An article comprising:

a compound in contact with a portion of a glass-containing substrate, wherein the compound at the time of contacting comprised an aqueous dispersion comprising:

(a) a thermoplastic resin;
(b) a dispersion stabilizing agent; and
(c) water

wherein the article is at least 92 percent by weight glass based on a total weight of the glass-containing substrate, the thermoplastic resin, and the dispersion stabilizing agent.

22. The article of clause 21, wherein the article is at least 94 percent by weight glass based on a total weight of the glass-containing substrate, the thermoplastic resin, and the dispersion stabilizing agent,

23. The article of clause 21, wherein the article is selected from the group consisting of mats, nonwovens, wovens, and fabrics.

24. The article of clause 21, wherein the glass is type E-glass.

25. A coated fiber, comprising:

a compound in contact with a portion of a glass-based fiber,
wherein the compound at the time of contacting comprised an aqueous dispersion comprising:

(a) a thermoplastic resin;
(b) a dispersion stabilizing agent; and
(c) water

wherein the fiber has a diameter between 5 and 35 microns;
and wherein a thickness of a coating layer of the compound on the glass-based fiber ranges from about 0.1 to 10 microns.

26. The coated fiber of clause 25, wherein the thermoplastic resin comprises a polyolefin having a Vicat softening point between 75°C and 110°C.

27. The coated fiber of clause 25, wherein the thermoplastic resin comprises a polyethylene homopolymer, copolymer, or multiblock interpolymer, a polypropylene homopolymer, copolymer, or multiblock interpolymer, or combinations thereof.

28. The coated fiber of clause 27, wherein the thermoplastic resin is a non-functionalized polymer.

29. An article formed from the coated fiber of clause 25.

30. A method of coating a fiber comprising:

applying a compound to a glass-based fiber, the compound comprising:

an aqueous dispersion comprising:

(a) a thermoplastic resin;
(b) a dispersion stabilizing agent; and
(c) water;

removing at least a portion of the water.

31. The method of clause 30, wherein the applying comprises:

contacting a fiber strand with the aqueous dispersion; and
passing the fiber through a shaping device.

32. The method of clause 30, wherein the glass-based fiber is a comminuted glass-based fiber.

33. The method of clause 30, wherein the glass-based fiber is a continuous fiber strand.

34. An article comprising:

at least one layer of a compound disposed on at least a portion of a glass-containing substrate, wherein the compound comprises:

(a) a polyolefin having a deformation temperature of less than 110°C; and
(b) a dispersion stabilizing agent; and

wherein the compound imparts a modified property to the substrate; and wherein the substrate is formable.

35. The article of clause 34, wherein the article is at least 92 weight percent glass based on a total weight of the substrate, the thermoplastic resin, and the dispersion stabilizing agent.

36. The article of clause 34, wherein the thermoplastic resin is non-functionalized and the dispersion stabilizing agent is functionalized.

37. The article of clause 34, wherein the thermoplastic resin is non-polar and the dispersion stabilizing agent is polar.

38. The article of clause 37, wherein the thermoplastic resin and dispersion stabilizing agent form two distinct phases.

39. The article of clause 34, wherein the article has a melting temperature of less than 110°C.

**Claims**

1. An article comprising:

at least one layer of a compound disposed on at least a portion of a glass-containing substrate, wherein the compound comprises:

(a) a polyolefin having a deformation temperature of less than 110°C; and
(b) a dispersion stabilizing agent; and

wherein the compound imparts a modified property to the substrate; and wherein the substrate is formable.

2. The article of claim 1, wherein the article is at least 92 weight percent glass based on a total weight of the substrate, the thermoplastic resin, and the dispersion stabilizing agent.

3. The article of claim 1, wherein the thermoplastic resin is non-functionalized and the dispersion stabilizing agent is functionalized.

4. The article of claim 1, wherein the thermoplastic resin is non-polar and the dispersion stabilizing agent is polar.

5. The article of claim 4, wherein the thermoplastic resin and dispersion stabilizing agent form two distinct phases.

6. The article of claim 1, wherein the article has a melting temperature of less than 110°C.

Figure 1

FIG. 2

FIG. 3

## EP 2 433 772 A1

EUROPEAN SEARCH REPORT

Application Number

EP 11 19 4356

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| X | EP 0 972 794 A (MITSUI CHEMICALS INC [JP]) 19 January 2000 (2000-01-19) * paragraphs [0014], [0026], [0047], [0048], [0055], [0058], [0077] * * claim 1 * ----- | 1-6 | INV. B29B15/12 B29B15/10  ADD. B29K101/12 B29K309/08 |
| X | WO 2005/085331 A (DOW GLOBAL TECHNOLOGIES INC [US]; MONCLA BRAD M [US]; ECKERSLEY SARAH) 15 September 2005 (2005-09-15) * paragraphs [0010], [0104], [0106] * * claims 1,2,5,12-14,18-20 * * figure 2 * ----- | 1-6 | |
| X | EP 0 718 318 A (DAI ICHI KOGYO SEIYAKU CO LTD [JP] DAI ICHI KOGYO SEIYAKU CO LTD) 26 June 1996 (1996-06-26) * page 2, line 5 - line 11 * * page 3, line 57 - page 4, line 6 * * page 8, line 12 - line 55 * * page 9, line 40 - line 41 * ----- | 1-6 | |
| X | US 2005/100754 A1 (MONCLA BRAD M [US] ET AL) 12 May 2005 (2005-05-12) * paragraphs [0006], [0038], [0043], [0091] - [0094] * * claims 1,41 * ----- | 1-6 | TECHNICAL FIELDS SEARCHED (IPC)  C08J B29B |
| X,P | WO 2007/008558 A (DOW GLOBAL TECHNOLOGIES INC [US]; MAAK KEVIN D [US]; YALVAC SELIM [US]) 18 January 2007 (2007-01-18) * paragraphs [0010] - [0012], [0020], [0023], [0151] * * claims 1,2,6,12,22 * ----- | 1-6 | |

The present search report has been drawn up for all claims

| Place of search | Date of completion of the search | Examiner |
|---|---|---|
| Munich | 24 January 2012 | Jouannon, Fabien |

EPO FORM 1503 03.82 (P04C01)

## ANNEX TO THE EUROPEAN SEARCH REPORT
## ON EUROPEAN PATENT APPLICATION NO.

EP 11 19 4356

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2012

| Patent document cited in search report | | | Publication date | Patent family member(s) | | Publication date |
|---|---|---|---|---|---|---|
| EP 0972794 | A | | 19-01-2000 | DE 69916537 | D1 | 27-05-2004 |
| | | | | DE 69916537 | T2 | 14-04-2005 |
| | | | | EP 0972794 | A1 | 19-01-2000 |
| | | | | US 6448321 | B1 | 10-09-2002 |
| WO 2005085331 | A | | 15-09-2005 | BR PI0506124 | A | 24-10-2006 |
| | | | | CA 2536397 | A1 | 15-09-2005 |
| | | | | CN 1860159 | A | 08-11-2006 |
| | | | | EP 1718693 | A1 | 08-11-2006 |
| | | | | JP 4809324 | B2 | 09-11-2011 |
| | | | | JP 2007525323 | A | 06-09-2007 |
| | | | | KR 20060052990 | A | 19-05-2006 |
| | | | | MX PA06006273 | A | 23-08-2006 |
| | | | | US 2005100754 | A1 | 12-05-2005 |
| | | | | US 2010048784 | A1 | 25-02-2010 |
| | | | | US 2011071244 | A1 | 24-03-2011 |
| | | | | US 2012009417 | A1 | 12-01-2012 |
| | | | | WO 2005085331 | A1 | 15-09-2005 |
| EP 0718318 | A | | 26-06-1996 | DE 69508718 | D1 | 06-05-1999 |
| | | | | DE 69508718 | T2 | 02-12-1999 |
| | | | | EP 0718318 | A2 | 26-06-1996 |
| | | | | US 5717048 | A | 10-02-1998 |
| US 2005100754 | A1 | | 12-05-2005 | BR PI0506124 | A | 24-10-2006 |
| | | | | CA 2536397 | A1 | 15-09-2005 |
| | | | | CN 1860159 | A | 08-11-2006 |
| | | | | EP 1718693 | A1 | 08-11-2006 |
| | | | | JP 4809324 | B2 | 09-11-2011 |
| | | | | JP 2007525323 | A | 06-09-2007 |
| | | | | KR 20060052990 | A | 19-05-2006 |
| | | | | MX PA06006273 | A | 23-08-2006 |
| | | | | US 2005100754 | A1 | 12-05-2005 |
| | | | | US 2010048784 | A1 | 25-02-2010 |
| | | | | US 2011071244 | A1 | 24-03-2011 |
| | | | | US 2012009417 | A1 | 12-01-2012 |
| | | | | WO 2005085331 | A1 | 15-09-2005 |
| WO 2007008558 | A | | 18-01-2007 | AR 057444 | A1 | 05-12-2007 |
| | | | | AU 2006269469 | A1 | 18-01-2007 |
| | | | | BR PI0615533 | A2 | 17-05-2011 |
| | | | | CA 2614309 | A1 | 18-01-2007 |
| | | | | CN 101238190 | A | 06-08-2008 |
| | | | | EP 1899432 | A2 | 19-03-2008 |
| | | | | JP 2009500497 | A | 08-01-2009 |
| | | | | KR 20080027385 | A | 26-03-2008 |

EPO FORM P0459

For more details about this annex : see Official Journal of the European Patent Office, No. 12/82

**ANNEX TO THE EUROPEAN SEARCH REPORT**
**ON EUROPEAN PATENT APPLICATION NO.**

EP 11 19 4356

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2012

| Patent document cited in search report | Publication date | Patent family member(s) | | Publication date |
|---|---|---|---|---|
| | | TW | I335349 B | 01-01-2011 |
| | | US | 2007160833 A1 | 12-07-2007 |
| | | WO | 2007008558 A2 | 18-01-2007 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4626306 A
- US 4680224 A
- US 5725710 A
- US 5888580 A
- US 6045912 A
- US 4728573 A
- WO 2004099529 A
- US 6818698 B
- WO 2004031246 A
- US 5437928 A
- US 5891284 A
- US 5972166 A
- US 3590000 A
- US 3645992 A, Elston
- US 4076698 A, Anderson
- US 5272236 A
- US 5278272 A
- US 6566446 B
- US 6538070 B
- US 6448341 B
- US 6316549 B
- US 6111023 A
- US 5869575 A
- US 5844045 A
- US 5677383 A
- US 5504172 A
- WO 0001745 A
- US 818911 P
- US 4762890 A
- US 4927888 A
- US 4950541 A
- US 4599392 A
- US 4988781 A
- US 5938437 A
- US 6051681 A
- US 3758643 A
- US 3806558 A
- US 5051478 A
- US 4104210 A
- US 4130535 A
- US 4202801 A
- US 4271049 A
- US 4340684 A
- US 4250273 A
- US 4927882 A
- US 4311628 A
- US 5248729 A
- US 5756659 A
- US 6455636 B

**Non-patent literature cited in the description**

- *Peroxide Vulcanization of Elastomer,* July 2001, vol. 74 (3